# EUROPÄISCHE PATENTSCHRIFT

(11) **EP 3 219 444 B1**
(45) Veröffentlichungstag und Bekanntmachung des Hinweises auf die Patenterteilung: **23.10.2019**
(21) Anmeldenummer: 17165768.7
(22) Anmeldetag: 09.07.2013
(51) Int. Cl.: B25B 27/14, H01R 43/042, B23D 17/02, B23D 29/00, B26B 15/00

(54) **PRESSWERKZEUG**
PRESSING TOOL
OUTIL DE COMPRESSION

(30) Priorität: 10.07.2012 DE 102012106186; 01.03.2013 DE 102013102037
(43) Veröffentlichungstag der Anmeldung: 20.09.2017
(62) Teilanmeldung aus: 13735258.9
(73) Patentinhaber: Gustav Klauke GmbH, 42855 Remscheid (DE)
(72) Erfinder: Frenken, Egbert, 52525 Heinsberg (DE)
(74) Vertreter: Müller, Enno

(56) Entgegenhaltungen:
- DE-A1- 10 161 717

## Beschreibung

Die Erfindung betrifft ein motorbetriebenes Hand-Presswerkzeug nach den Merkmalen des Oberbegriffes des Anspruches 1.

Hinsichtlich Presswerkzeugen ist zunächst auf die US 6,662,620 B1 zu verweisen. Darüber hinaus ist etwa auf einen Stand der Technik gemäß der DE 197 09 017 A1 zu verweisen, weiter auch auf die EP 679 476 B1 (US 5,735,353 A).

Bei dem aus erstgenannter Druckschrift bekanntem Verpressgerät wird die Verpressung motorisch durch Drehung einer auf den Beaufschlagungsbereich der Verpressbacke wirkenden Nockenscheibe durchgeführt. Bei dem aus der DE 197 09 017 A1 bekannten Verpressgerät wird die bewegliche Pressbacke linear bewegt während das Beaufschlagungsteil eine hierzu senkrechte Bewegung durchführt.

Bei dem aus der EP 679 476 B1 (US 5,735,353 A) bekannten Verpressgerät, das auch eine linear bewegbare Pressbacke aufweist, erfolgt der Antrieb über ein auf eine Kurvenscheibe mit Schrägverzahnung einwirkendes Stirnzahnrad. Der Beaufschlagungsbereich ist gesehen von dem Stirnzahnrad jenseits der Kurvenscheibe angeordnet. Aus der US 5,806,362 A ist ein Pressgerät bekannt, bei welchem die Beaufschlagung der verschwenkbaren Pressbacke mittels einer endseitig auf die Pressbacke einwirkenden Walze oder eines Kolben-/Zylinderantriebes, der über ein Kniehebelgestänge die Pressbacke beaufschlagen kann, erfolgt.

Aus der DE 10161717 A1 ist ein stationäres Pressgerät bekannt, bei welchem die Verpressbacken in Nebeneinanderanordnung zu dem Elektromotor und der Gewindespindel zwischen dem Elektromotor und der Gewindespindel angeordnet sind. Bei einem Verpressvorgang wird das Beaufschlagungsteil entlang dem Elektromotor, und parallel zu einer Längsachse des Elektromotors, bewegt.

Ausgehend von dem dargelegten Stand der Technik beschäftigt sich die Erfindung mit der Aufgabe, ein motorbetriebenes Hand-Presswerkzeug mit schwenkbaren Verpressbacken anzugeben, bei welchem bei einfachem Aufbau eine günstige Beaufschlagung der Verpressbacken erreicht ist.

Diese Aufgabe ist beim Gegenstand des Anspruches 1 gelöst, wobei darauf abgestellt ist, dass das Presswerkzeug langgestreckt stabartig ausgebildet ist, mit dem Elektromotor, der Gewindespindel und einem Getriebe zwischen dem Elektromotor und der Gewindespindel in stabartiger Hintereinanderanordnung und dass die Gewindespindel sich längsmittig zwischen Beaufschlagungsbereichen der Verpressbacken erstreckt.

Das Verfahrteil ist motorisch in kraftübertragende Einwirkung auf das Beaufschlagungsteil bringbar, wobei die Verpressbacke handbetätigt in eine Klemmstellung bewegbar ist und eine Auslösung der motorischen Bewegung in Abhängigkeit eines von Hand aufgebrachten Klemmdruckes erfolgt.

Eine Längserstreckung der Verpressbacken und eine Bewegung des Beaufschlagungsteils verlaufen in die gleiche Richtung. Hiermit ist ein sowohl von Hand wie motorisch beaufschlagbares Verpressgerät gegeben, das langgestreckt stabförmig ausgebildet ist, wobei im Bereich der Verpressbacken eine größte Breite des Verpressgerätes an der Breite der Verpressbacken (lediglich) orientiert sein muss. Die Pressbacken selbst können jede in einem festen Drehpunkt drehgelagert sein.

Zur Ausübung der Handkraft kann das Beaufschlagungsteil einen entsprechenden Fortsatz aufweisen, der als Griffteil bezeichenbar ist. Es kann auch mittels eines Hebelteils oder eines sonstigen Übertragungsteils auf das Beaufschlagungsteil einwirkbar sein.

Das Beaufschlagungsteil und das Verfahrteil können koaxial bewegbar sein und beide auf einer Gewindespindel, diese umgebend, angeordnet sein, wobei die Gewindespindel zur motorischen Beaufschlagung des Verfahrteils dient. Das Beaufschlagungsteil nutzt bevorzugt die Spindel nur als Linearführung. Es kann auch unabhängig von der Spindel, gleichwohl dieser zugeordnet oder diese umgebend, geführt sein. Das Beaufschlagungsteil kann relativ zu der feststehenden Spindel bewegt werden, während bevorzugt das Verfahrteil nur durch die angetriebene, sich drehende Spindel, jedenfalls in Bezug auf eine motorunterstützte Verpressung, weiter bevorzugt aber auch im Hinblick auf ein Zurückfahren aus einer Verpressstellung in eine Anfangsstellung, bewegt werden kann.

Hinsichtlich der handbetätigten Bewegung der Verpressbacke in die Klemmstellung und der Auslösung der motorischen Bewegung in Abhängigkeit eines von Hand aufgebrachten Klemmdrucks kann eine Schaltbewegung bei Auslösung der motorischen Bewegung sich durch eine Versetzung einer Lagerungsachse des Handhebels relativ zu dem Hebelteil oder durch Versetzung eines Einwirkteiles ergeben, wobei das Einwirkteil, mit dem das Hebelteil bewegungsgekoppelt ist, sich gesehen von einem freien Ende des Hebelteils jenseits der Lagerungsachse des Hebelteils befindet. Hierdurch ist insbesondere eine günstige Anordnung eines Schalters zur Auslösung der motorischen Bewegung ermöglicht. Die von einem Benutzer selbst zu umfassende Grifffläche des Hebelteils bewegt sich nicht. Gleichwohl spürt ein Benutzer einen gewissen besonderen Bewegungsabschnitt im Zuge des Übergangs zur motorischen Verpressung.

Von Hand kann ein gewisser Klemmdruck aufgebracht werden, der durch eine federnde Lagerung der genannten Lagerachse oder des Einwirkteils eingestellt sein kann.

Es kann aber auch unabhängig hiervon eine gesonderte Erfassung eines Klemmdruckes vorgesehen sein, der die Motorunterstützung auslöst. Sei es ergänzend zu der vorbeschriebenen Auslösung oder allein hierdurch. Diesbezüglich kann der Klemmdruck beispielsweise durch einen Kraftsensor, weiter beispielsweise innerhalb der Verpressbacke angeordnet, ermittelt werden. Er kann auch durch ein auf Druck reagierendes Bauteil, wie etwa eine Feder, die bis zu einem bestimmten Vorspanndruck unbeweglich und dann gegebenenfalls komprimierbar ist, erreicht sein.

Das genannte Einwirkteil kann beispielsweise durch eine nachstehend noch beschriebene Feder gegeben sein, die eine Bewegung des Hebelteils relativ zu einer bevorzugt in diesem Fall unmittelbar an einer Verpressbacke ausgebildeten Achse ermöglicht, oder durch einen Lenker, mit welchem auf ein Schaltteil eingewirkt wird. Die genannte Achse, relativ zu welcher sich das Hebelteil weiter alternativ oder ergänzend bewegen kann, ist bevorzugt die Drehachse des Hebelteils insgesamt selbst.

Die Verpressbacke erstreckt sich bevorzugt hinsichtlich ihrer Mittelebene parallel zu einer Längsachse der Gewindespindel. Die Pressbacke kann in diesem Zusammenhang, aber auch unabhängig hiervon, plattenförmig gebildet sein.

Die Gewindespindel, die nachstehend auch als Spindel angesprochen ist, weist bevorzugt ein metrisches Gewinde auf. Sie wirkt mit einer geeigneter Weise ein gleiches Gegengewinde aufweisenden Spindelmutter, nachstehend auch als Verfahrteil bezeichnet, zusammen.

Die Spindel ist bevorzugt an einer Längsrichtung der Verpressbacke ausgerichtet verlaufend vorgesehen. Ein gewisser kleiner spitzer Winkel, eingeschlossen mit der Längsrichtung, kann gegebenenfalls vorhanden sein.

Es ist bevorzugt, dass das Hebelteil mit dem Beaufschlagungsteil gelenkverbunden ist. Das Hebelteil kann hierbei in einer, gegebenenfalls einer ersten, Längserstreckung die Bewegungsrichtung des Beaufschlagungsteils schneidend angeordnet sein. Die Gelenkverbindung mit dem Beaufschlagungsteil ist aber weiter bevorzugt gesondert zu einer Lagerung des Hebelteils an dem Halterungsteil bzw. einem Gehäusebereich des Verpressgerätes vorgesehen.

Das Hebelteil kann mit dem Beaufschlagungsteil auch über Formschluss zusammenwirken. Etwa im Sinne einer Verzahnung. Gegebenenfalls auch über ein Zwischenteil, das zwischen dem Hebelteil und dem Beaufschlagungsteil ergänzend angeordnet ist.

Das Hebelteil kann weiter bevorzugt in dem Lagerungsbereich relativ zu dem Gehäuse beweglich sein. Hierbei ist es vorteilhaft, wenn das Hebelteil in einen ersten Lagerungsort federvorgespannt ist. Die Federvorspannung bewirkt, dass das Hebelteil sich zunächst in diesem Lagerungsteil bei einer Bewegung des Hebelteils nicht bewegt. Jedoch bei Überschreiten einer gewissen Schwellkraft, die auf das Hebelteil in dem Lagerungsbereich wirkt, kann eine Bewegung des Hebelteils in dem Lagerungsbereich erfolgen.

Diese Bewegung des Hebelteils ist weiter bevorzugt dahingehend genutzt, dass hierdurch eine Ein- oder Ausschaltung des Motors auslösbar ist. Diese kann ausgehend von der Bewegung des Hebelteils in dem Lagerbereich erfolgen. Die genannte Schwellkraft entspricht insofern dem genannten Klemmdruck. Durch eine Einschaltung des Motors beginnt die motorunterstützte Beaufschlagung der Verpressbacken. Für den Benutzer wird durch den einwirkenden Motor gleichsam die Handkraft deutlich oder auch um ein mehrfaches verstärkt.

Das Beaufschlagungsteil kann über einen Lenker, der dem genannten Zwischenteil auch entspricht, auf die Verpressbacke einwirken. Das Beaufschlagungsteil kann aber auch beispielsweise als hinsichtlich ihrer Achse linear verfahrbare Rolle ausgebildet sein, die auf einen entsprechend gekrümmt in Verfahrrichtung des Beaufschlagungsteils gestalteten Beaufschlagungsbereich der Verpressbacke einwirkt. Hierzu wird beispielsweise auf eine Pressbackenbeaufschlagung verwiesen wie sie in der WO 2007/082951 A1 bzw. der US 2010/0275672 A1 bekannt ist.

Weiter bevorzugt ist ein Verfahrteil vorgesehen, das motorisch in kraftübertragende Einwirkung auf das Beaufschlagungsteil bringbar ist. Insbesondere dann, wenn in der beschriebenen Weise die Motorunterstützung ausgelöst ist, verfährt das Verfahrteil bis in eine Anlage an das Beaufschlagungsteil, wenn es sich nicht schon daran befindet und bewegt dann mit Motorkraft das Beaufschlagungsteil weiter, so dass die Verpressung vollendet wird.

Die Kombination der langgestreckten, sich in Längsrichtung des Verpressgerätes erstreckenden Verpressbacken mit einer durch einen Elektromotor, über ein Getriebe, das weiter bevorzugt ein Untersetzungsgetriebe ist, angetriebenen Spindel, die sich in Überdeckung zu den Beaufschlagungsbereichen der Verpressbacken und längsmittig zwischen den Beaufschlagungsbereichen der Verpressbacken erstreckt, darüber hinaus gegebenenfalls mit einem Akkumulator und/oder einem Netzanschluss bezüglich des Elektromotors, hat auch eigenständige Bedeutung. Hierdurch ist das langgestreckt stabförmige Gerät vergleichsweise kurz ausbildbar. Insbesondere ist bevorzugt, dass eine Gesamtlänge des Gerätes dem 2 ½-fachen bis 4-fachen der Länge der Verpressbacken (nur) entspricht.

Weiter ist das Beaufschlagungsteil und/ oder das Verfahrteil auch gegen die Kraft einer Rückstellfeder zu bewegen. Hierbei ist darüber hinaus bevorzugt, dass die Rückstellfeder zugeordnet einer fortgeschrittenen Verschwenkung einer oder der Verpressbacken aus einer Ruhestellung in eine Verpressstellung einer Verpressbacke eine steilere Federkennlinie aufweist als zugeordnet einem Beginn der Verschwenkung. Insbesondere kann die Rückstellfeder hierzu auch mehrteilig ausgebildet sein. Darüber hinaus bevorzugt wird die steilere Federkennlinie insoweit durch eine Tellerfeder oder einen Tellerfederabschnitt der insgesamt mehrteilig ausgebildeten Rückstellfeder erbracht.

Hinsichtlich der Durchführung einer Verpressung ist auch bevorzugt, dass in Abhängigkeit des Überschreitens eines Kraft-Schwellwertes vor vollständiger Durchführung der Verpressung eine Freigabe des Hebelteils nur ein Anhalten einer Bewegung der Verpressbacke bewirkt. Bis der genannte Kraft-Schwellwert erreicht ist, bewirkt eine Freigabe des Hebelteils ein Zurückfahren des Beaufschlagungsteils, so dass die Verpressbacke auch in eine Ausgangsstellung zurückschwenken kann. Dies ist entsprechend auch gegeben, wenn der genannte Schwellwert nicht erfasst oder nicht ausgewertet wird.

Der Kraft-Schwellwert kann beispielsweise über den Motorstrom des das Beaufschlagungsteil, bevorzugt den die Spindel antreibenden Elektromotor, bestimmt werden. Ein Überschreiten eines bestimmten Schwellwertes des Motorstroms kann diesem Kraft-Schwellwert gleichgesetzt werden.

Es ist auch bevorzugt, dass vor einer vollständigen Durchführung einer Verpressung schalterbetätigt eine Freigabe des Beaufschlagungsteils für eine Rücklaufbewegung durchführbar ist. Dies um ein Verschwenken der Verpressbacke in eine Öffnungsstellung zu ermöglichen. Im Zuge einer Verpressung, die durchgeführt werden soll, kann sich beispielsweise ergeben, dass beispielsweise aufgrund falschen Einlegens eines zu verpressenden Teils oder einer Kombination von Teilen in das Pressmaul eine Fehlverpressung stattzufinden droht. Wenn dies erkannt wird, kann durch die Freigabe des Beaufschlagungsteils die Rücklaufbewegung erreicht werden und so das zu verpressende Teil oder die zu verpressende Kombination vor vollständiger Durchführung der Verpressung wieder freigegeben werden.

Die Freigabe des Beaufschlagungsteils kann weiter bevorzugt durch eine Bewegung des Hebelteils unter Ausübung von Handkraft unterschiedlich zu einer Bewegung des Hebelteils bei einer Verpressung durchführbar sein. Etwa durch ein Drücken oder Schwenken in einer anderen Richtung als es zur Durchführung der Verpressung vorgesehen ist. Insbesondere durch ein Verschwenken in entgegengesetzter Richtung.

Hinsichtlich der Zusammenwirkung des Hebelteils mit dem die motorbetätigte Bewegung der Schwenkbacke auslösenden Schalter kann auch vorgesehen sein, dass der Lenker zunächst auf ein schwenkbewegbares Schaltteil einwirkt und dieses Schaltteil in Zusammenwirkung mit dem genannten Schalter ist.

Insbesondere diese Maßnahme kann es ermöglichen, dass das Hebelteil nur eine Drehbewegung um eine Drehachse bei Betätigung durchführt. Weiter bevorzugt kann vorgesehen sein, dass das Hebelteil in der Draufsicht auf das Hand-Presswerkzeug, wiederum bevorzugt bezogen auf eine Ansicht in welcher sich die Schwenkachse punktförmig darstellt, auf der Seite der Spindel drehgelagert ist, auf welcher das Hebelteil auch zur Betätigung freiliegt.

Zur Steuerung des Hand-Presswerkzeuges sind zwei oder mehr Schalter vorgesehen, wie bereits angesprochen.

Bevorzugt sind vier Schalter vorgesehen.

Weiter ist auch bevorzugt, dass die zwei oder mehreren Schalter, bevorzugt alle Schalter, die vorgesehen sind, auf einer gemeinsamen Platine angeordnet sind. Die Platine kann sich in Überdeckung zu der Spindel und/oder dem Beaufschlagungsteil erstreckend angeordnet sein.

Weiter kann auch ein Leuchtmittel vorgesehen sein, das in einer Bewegungsrichtung des Bewegungsteils strahlend angeordnet ist. Insbesondere kann dieses Leuchtmittel auch auf der genannten Platine vorgesehen sein.

Bevorzugt ist auch, dass zugeordnet der Spindel ein Schmiermittelvorrat vorgesehen ist. Dies um kontinuierlich die Spindel während des Betriebs, insbesondere im Hinblick auf eine vorgesehene große Anzahl von Betriebsstunden mit Schmiermittel zu versorgen. Die Zuordnung kann derart gegeben sein, dass die Spindel den Schmiermittelvorrat, der auch in einer gewissen Anpressung auf die Spindel vorgesehen sein kann, kontinuierlich durchläuft. Bevorzugt ist weiter, dass der Schmiermittelvorrat endseitig der Spindel vorgesehen ist. Hierzu kann beispielsweise ein dem freien Ende der Spindel zugeordnetes topfartiges Behältnis vorgesehen sein. Das topfartige Behältnis kann zu der Spindel hin öffnend vorgesehen sein. Es kann auch mit einem Endbereich der Spindel in Überdeckung angeordnet sein. In diesem Fall, bevorzugt aber auch unabhängig von einer solchen Ausgestaltung, bewegt sich das freie Ende der Spindel ständig in dem Bereich des Schmiermittelvorrates.

Weiter ist auch bevorzugt, dass in dem Hand-Presswerkzeug eine Zählvorrichtung zur Zählung durchgeführter Verpressungen, beispielsweise Vercrimpungen, vorgesehen ist. Hierbei werden bevorzugt lediglich vollständig durchgeführte Verpressungen als Verpressungen registriert. Weiter werden auch Fehlbetätigungen registriert. Auch dann wenn es zu einem Überschreiten eines Schwellwertes hinsichtlich der Presskraft, insbesondere bevorzugt hinsichtlich des Motorstromes, kommt, wird ein solcher Vorgang nicht als Verpressung sondern als Fehlbetätigung gewertet und gezählt.

Das Hebelteil kann weiter über ein schon genanntes Zwischenteil, das bevorzugt als Zwischenhebel ausgebildet ist, auf das Beaufschlagungsteil einwirken. Hierbei kann das Hebelteil mit dem Zwischenteil bzw. dem Zwischenhebel mittels einer Verzahnung zusammenwirken.

Besonders bevorzugt ist auch, dass das Hebelteil ein Kunststoffteil beispielsweise ein Kunststoffspritzteil, also bevorzugt bestehend aus einem Hartkunststoff, ist. Dagegen kann das Zwischenteil, insbesondere der Zwischenhebel ein Metallteil sein. Hierbei ist auch weiter bevorzugt, dass die Zahnbreiten unterschiedlich sind. Hierbei ist darüber hinaus bevorzugt, dass eine Zahnbreite an dem Metallteil kleiner ist und an dem Kunststoffteil größer. Die Zahnbreite des Kunststoffteils kann beispielsweise dem 1,1- bis 3-fachen der Zahnbreite des Metallteils entsprechen. Die Zahnabstände sind entsprechend an dem Kunststoffteil kleiner und an dem Metallteil größer. So lässt sich eine günstige Ausnutzung des Werkstoffes erreichen.

Weiter ist auch bevorzugt, dass ein nur teilweises Zurückfahren des Beaufschlagungsteils vorgebbar ist. Dies kann Bedeutung haben, wenn in Folge eine Vielzahl von Werkstücken zu bearbeiten sind, die nur eine relativ geringe Öffnung eines Pressmauls erfordern. Es kann dann ein zeitlicher Gewinn dadurch erreicht werden, dass nicht das Verfahren in eine vollständige Öffnungsstellung des Pressmauls jeweils abzuwarten ist.

Das genannte teilweise Zurückfahren des Beaufschlagungsteils kann etwa dadurch erreicht sein, dass ein einem Pressbeginn entsprechender Wert der Spindelstellung gespeichert wird und bei dieser Spindelstellung, die einer bestimmten Umdrehungsstellung der Spindel dann beispielsweise entspricht, beim Zurückfahren des Verfahrteils bzw. des Beaufschlagungsteils ein Anhalten der Spindel erfolgt. Gegebenenfalls kann diese Stellung mit einer gewissen Zugabe berechnet werden, so dass weiterhin ein günstiges Einlegen eines zu verpressenden Teils in das Pressmaul möglich ist. Der Beginn einer Verpressung bzw. eine diesbezügliche Stellung der Spindel kann beispielsweise durch einen über einen Drucksensor erfassten Druck (Einwirkdruck auf einen Pressling bzw. ein Werkstück) erfassbar sein. Hierbei wird geeigneter Weise eine gewisse Zugabe bezüglich der Spindelstellung beim Rücklauf vorgenommen, um ein unbeschwertes Erfassen eines neuen Werkstückes in dieser Stellung zu ermöglichen.

Insbesondere kann die Speicherung des einem Pressbeginn entsprechenden Wertes und/oder das teilweise Zurückfahren auch durch eine Betätigungsabfolge auslösbar sein. Etwa wenn in kurzer Zeit nacheinander das Hebelteil bewegt wird, beispielsweise auch dann, wenn bereits die Motorverpressung eingesetzt hat.

Die genannte Speicherung bzw. Feststellung der Stellung des Beaufschlagungsteils und/oder des Verfahrteils kann insbesondere durch Ausnutzung der Feststellung der Winkeldrehung eines Elektromotors, grundsätzlich eines einfachen Gleichstrommotors, erreicht werden. Dies auch bevorzugt ohne zusätzliche Sensoren, allein aufgrund einer Spannungs- und Strommessung.

Die genannte gesonderte Betätigung, die zu dem Speichervorgang der Stellung der Spindel bei Beginn der Verpressung führen kann, kann etwa auch dadurch gegeben sein, dass nach Auslösung der Motorunterstützung die Spindel noch nicht selbsttätig weiterdreht bis die Verpressung vollendet ist, sondern vielmehr ein Bewegungsabschnitt zwischengeschaltet ist, in dem weiterhin der Handdruck erforderlich ist, um die motorunterstützte Verpressung voranzubringen. Insofern kann in diesem Bereich ein schrittweises Verfahren dann vorgenommen werden. Dieses schrittweise Verfahren kann von einer Auswerteelektronik des Gerätes als Signal gewertet werden, dass ein Beginn der Verpressung gegeben ist und in Abhängigkeit der diesem Beginn zugeordneten Spindelstellung dann nach erfolgter vollständiger Verpressung das Zurückfahren erfolgt.

Auch kann von einem Benutzer das schrittweise Verfahren bis zu einer ersten Werkstückberührung vorgenommen werden und der Übergang zu einer stetigen Verpressung (diesbezügliche Spindelstellung) dann als Wert gespeichert werden, bis zu welchem (gegebenenfalls wiederum mit gewisser Zugabe) die Spindel nach vollendeter Verpressung zurückfährt.

Es kann auch eine bestimmte Bewegungsabfolge gegeben sein, um wieder das vollständige Zurückfahren in die Ausgangsstellung zu erreichen. Dies kann etwa dadurch gegeben sein, dass das Griffteil oder Betätigungsteil, insbesondere der Betätigungshebel, entgegengesetzt zu seiner üblichen, die Klemmung oder Verpressung auslösenden Bewegung, zu bewegen ist. Und einem Endbereich dieser Bewegung etwa ein Sensor zugeordnet ist, dessen Signal dann dazu ausgewertet wird, wiederum ein vollständiges Zurückfahren des Bewegungsteils bzw. des Beaufschlagungsteils durchzuführen. Dies kann einer Bewegung des Griffteils bei einer Notöffnung entsprechen.

Hinsichtlich der Stellung der Spindel kann ausgenutzt werden, dass ein Spindeldrehwinkel dem Integral der Spindeldrehzahl über die Zeit entspricht. Da wiederum die Spindeldrehzahl proportional zur induzierten Spannung in den Spulen des Motors ist, lässt sich hierüber auch die genannte Spindelstellung berechnen. Unter Berücksichtigung einer Proportionalitätskonstante lässt sich der Weg des Verfahrteils aus den Messgrößen Motorspannung und Motorstrom hinreichend genau berechnen. Dies sowohl bei der motorunterstützten Verpressung bis zum Erreichen des Endschalters als auch bis zum Abschalten während des Rücklaufs bis zur gewählten (Zwischen-)Startposition.

Die vor- und nachstehend angegebenen Bereiche bzw. Wertebereiche oder Mehrfachbereiche schließen hinsichtlich der Offenbarung auch sämtliche Zwischenwerte ein, insbesondere in ¹/₁₀-Schritten der jeweiligen Dimension, gegebenenfalls also auch dimensionslos, also beispielsweise ¹/₁₀ (der Länge oder des x-fachen), einerseits zur Eingrenzung der genannten Bereichsgrenzen von unten und/oder oben, alternativ oder ergänzend aber auch im Hinblick auf eine Offenbarung eines oder mehrerer singulärer Werte aus dem jeweilig angegebenen Bereich. Wenn also beispielsweise ein Bereich (für eine Länge) mit einem 3- bis 5-fachen (einer Breite) angegeben ist, ist auch offenbart das 3,1- bis 5-fache, das 3- bis 4,9-fache, das 3,1- bis 4,9-fache, das 3,2- bis 5-fache etc., wobei gleiches gilt im Hinblick auf dimensionsbehaftete Bereiche, also etwa den Bereich einer Länge von 3 mm bis 5 mm.

Nachstehend ist die Erfindung weiter anhand der beigefügten Zeichnung erläutert, die aber lediglich ein Ausführungsbeispiel darstellt. Auf der Zeichnung zeigt:
- Fig. 1: eine Seitenansicht des Presswerkzeuges;
- Fig. 2: eine Ansicht des Arbeitskopfes in vergrößerter Darstellung gemäß Figur 1, vor Beginn einer Verpressung;
- Fig. 3: eine Darstellung gemäß Figur 2, bei nahezu vollständiger Verpressung;
- Fig. 4: eine perspektivische Ansicht eines vollständigen Hand-Verpressgerätes;
- Fig. 5: eine perspektivische Ansicht eines Gerätekopfes, ohne Verkleidungsteile, von schräg vorne;
- Fig. 6: eine Explosionsdarstellung des Gerätekopfes gemäß Figur 5;
- Fig. 7: eine Draufsicht auf den Gerätekopf gemäß Figur 5;
- Fig. 8: eine Ansicht gemäß Figur 7, nach erster Hand-Betätigung des Hebels;
- Fig. 9: eine Darstellung gemäß Figur 7 bzw. Figur 8, nach weiterem Verschwenken des Hebelteils und erfolgter Motorbetätigung;
- Fig. 10: eine Darstellung einer weiteren Ausführungsform in einer Ansicht gemäß Figur 8;
- Fig. 11: eine perspektivische Ansicht von schräg vorne der Ausführungsform gemäß Figur 10 vor einer Betätigung;
- Fig. 12: eine perspektivische Ansicht einer weiteren Ausführungsform der Erfindung;
- Fig. 13: eine Explosionsdarstellung der Ausführungsform gemäß Figur 12;
- Fig. 14: eine Seitenansicht der Ausführungsform gemäß Figur 12 bzw. Figur 13, in einer nichtbetätigten Stellung;
- Fig. 15: eine Darstellung gemäß Figur 14 bei einer ersten von Hand Betätigung zur Klemmung eines Werkstücks;
- Fig. 16: eine Weiterführung der Betätigung ausgehend von der Darstellung gemäß Figur 15, unter Auslösung des Motorbetriebes;
- Fig. 17: eine Darstellung gemäß Figur 14 während der motorunterstützten Verpressung;
- Fig. 18: eine Darstellung gemäß Figur 17, bei Beendigung der Motorverpressung;
- Fig. 19: eine Darstellung betreffend Notentriegelung;
- Fig. 20: eine Darstellung einer weiteren Ausführungsform mit Rollenbetätigung bezüglich der Verpressbacken, bei an den Verpressbacken angebrachten Rollen, in der Öffnungsstellung;
- Fig. 21: eine Darstellung gemäß Figur 20, in der Schließstellung;
- Fig. 22: eine weitere Ausführungsform betreffend Betätigung über Rollen, wobei die Rollen an dem Beaufschlagungsteil angebracht sind, in der Öffnungsstellung;
- Fig. 23: eine Darstellung gemäß Figur 22 in der Schließstellung;
- Fig. 24: eine weitere Ausführungsform einer Betätigung der Verpressbacken über Rollen, mit den Rollen an dem Beaufschlagungsteil, wobei die Rollen sich unmittelbar gegeneinander abstützen, in der Öffnungsstellung; und
- Fig. 25: eine Darstellung gemäß Figur 24 in der geschlossenen Stellung der Verpressbacken (Schneidbacken).

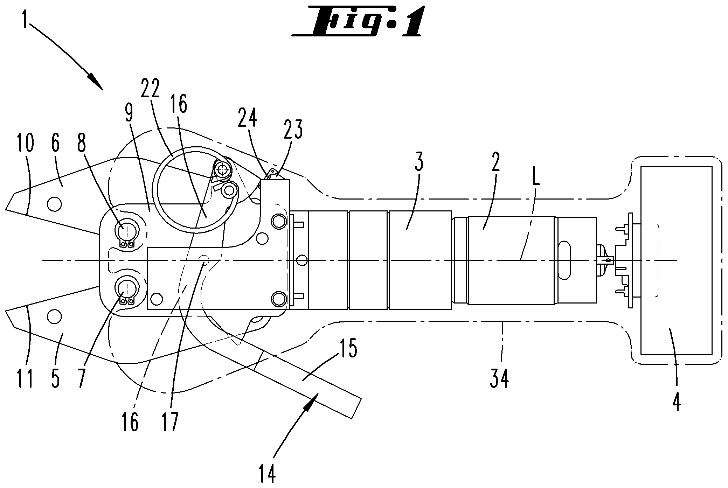

Dargestellt und beschrieben ist ein motorbetriebenes Presswerkzeug 1, das einen Elektromotor 2 und ein Getriebe 3 in stabartiger Hintereinanderanordnung aufweist. Auf der dem Getriebe 3 abgewandten Seite des Elektromotors 2 ist in bevorzugt weiterer stabartiger Anordnung ein Akkumulator 4 vorgesehen. Ein Gehäuse 34 ist strichliniert in Figur 1 angedeutet.

Das Presswerkzeug 1 ist auch bevorzugt nur stabartig, ohne abzweigenden Gehäuseteil (betreffend eine Draufsicht etwa gemäß Figur 1), etwa in der Kontur vergleichbar einer Taschenlampe, gebildet. Ein konturmäßig gegenüber einem Griffbereich verdickter Kopfbereich ist durch die äußere Kontur der Verpressbacken bzw. eines diese überdeckenden (und hinsichtlich der Bewegung mit gewissem Freiraum in der Verschlussstellung umgebenden) Gehäuseteil bestimmt.

An dem dem Arbeitsbereich gegenüberliegenden Ende ist bevorzugt ein Ackumulator angeordnet. Dieser kann wie in Figur 1 ersichtlich, eine Verdickung des Gehäuses bzw. des Stabendes bedeuten. Er kann aber auch fluchtend zu der Kontur des Griffbereiches, also gleichsam als weitere Verlängerung des Griffbereiches, ausgebildet sein.

Der Arbeitsbereich des Presswerkzeuges 1 wird durch zwei Verpressbacken 5, 6 gebildet, die beide drehbar, beim Ausführungsbeispiel über Achsen 7, 8 an einem Halterungsteil 9 des Verpresswerkzeuges 1 verschwenkbar gelagert sind.

Die Pressbacken können sogleich mit einer Schneid- und/oder Pressgeometrie, die im Einzelnen nicht dargestellt ist, ausgebildet sein. Eine solche Ausgestaltung ist beispielsweise bei den Pressbacken des aus der eingangs genannten DE 197 09 017 A1 bekannten Presswerkzeuges vorgesehen. Alternativ können auch Presseinsätze an den Arbeitsbereichen der Verpressbacken befestigt sein. Hierzu wird etwa auf die Ausgestaltung bei einem Presswerkzeug gemäß der DE 198 02 287 C1 bzw. der US 6,053,025 A verwiesen. Rückseitig zu dem jeweiligen Arbeitsbereich 10, 11 einer Verpressbacke 5, 6 ist an jeder Verpressbacke ein sich in Längsrichtung der Verpressbacke erstreckender Beaufschlagungsbereich 12, 13 ausgebildet. Die Längsrichtung des Beaufschlagungsbereiches ist beim Ausführungsbeispiel die gleiche Längsrichtung, die das stabförmige Verpresswerkzeug 1 insgesamt aufweist. Sie entspricht einer Längsachse L des Presswerkzeugs. Ein Beaufschlagungsbereich ist bevorzugt innenrandseitig einer Pressbacke ausgebildet. Bei zwei Pressbacken sind die Beaufschlagungsbereiche bevorzugt einander zugewandt ausgebildet.

Darüber hinaus ist auch gegeben, dass eine Verpressbacke 5, 6 quer zu den Achsen 7, 8 langgestreckt, d. h. mit einer größeren Länge als Breite ausgebildet ist. Auch insofern ergibt sich eine Längsrichtung der Verpressbacken 5, 6.

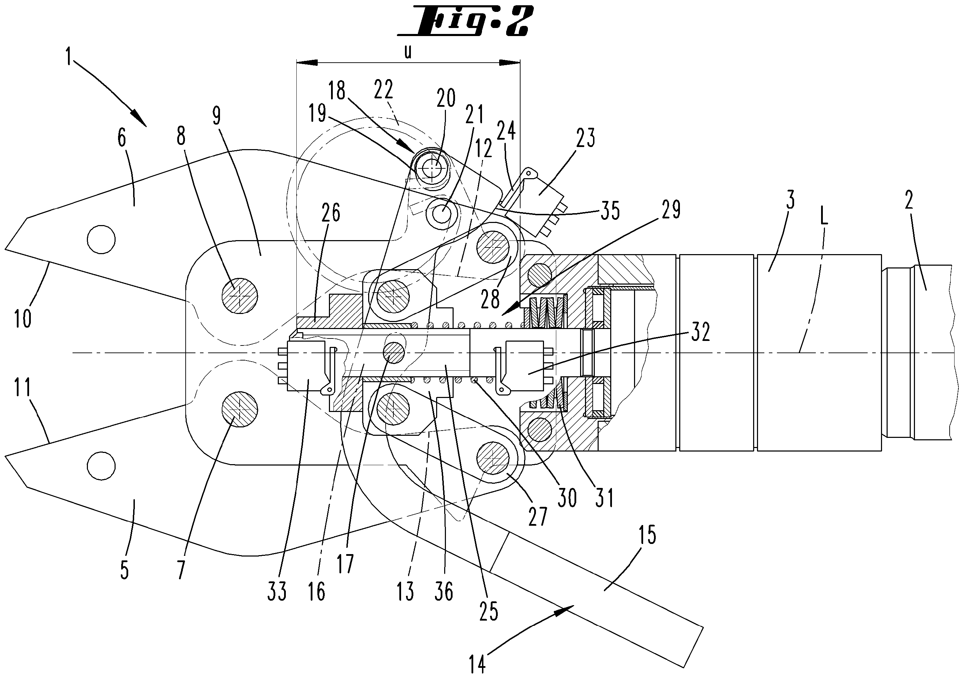

Zur Durchführung einer Verpressung ist ein Beaufschlagungsteil 36 (siehe beispielsweise Figur 2) vorgesehen. Das Beaufschlagungsteil 36 ist relativ zu den beim Ausführungsbeispiel beiden Beaufschlagungsbereichen 12, 13 der beim Ausführungsbeispiel auch beiden Verpressbacken 5, 6 bewegbar. Es ist bevorzugt in Längsrichtung einer Verpressbacke 5, 6 bzw. eines Beaufschlagungsbereiches 12, 13 einer Verpressbacke zu bewegen.

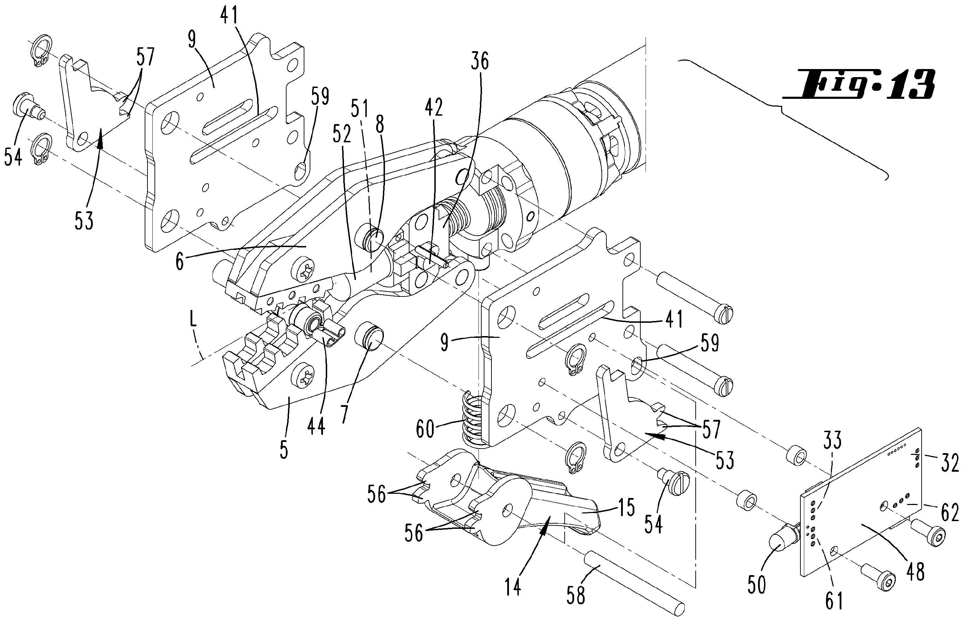

Bei einem insofern ersten Ausführungsbeispiel, betreffend die Figuren 1 bis 19, werden die Beaufschlagungsbereiche, aufgrund der konkret ausgebildeten Lenkerbetätigung der Pressbacken, wie weiter unten noch im Einzelnen erläutert, nicht durch eine Entlangbewegung eines Teiles wie etwa einer Rolle beaufschlagt, sondern durch die Lenkerbetätigung ohne unmittelbare Kraftbeaufschlagung lediglich bewegt.

Darüber hinaus ist das Beaufschlagungsteil 36 bevorzugt linear bewegbar und in Längsrichtung der Beaufschlagungsbereiche 12, 13 sowohl durch Ausübung von Handkraft mittels eines Hebelteils 14 wie auch durch den genannten Motor motorisch bewegbar. Das Beaufschlagungsteil kann auch nur motorisch bewegbar sein.

Unabhängig hiervon ist auch der grundsätzliche konstruktive Aufbau des Presswerkzeuges von Bedeutung. Im Hinblick auf die Darstellung der Figuren 1 und 2, in welcher sich ersichtlich die geometrischen Schwenkachsen 7, 8 als Punkte abbilden, ist in Längserstreckungsrichtung der Verpressbacken 5, 6 eine feststehende Spindel 25 vorgesehen. Diese Spindel ist in Axialrichtung feststehend. Weiter bevorzugt ist die Spindel auch in Radialrichtung feststehend. Sie ist aber um ihre Längsachse drehbar, um die Spindelfunktion auszuführen. Mit dieser Spindel, die sich entsprechend in ihrer Längsrichtung in bevorzugt seitlicher Überdeckung, vergleiche Überlappungsbereich u bezogen auf die Draufsicht gemäß Figur 2, zu einem oder beiden Beaufschlagungsbereichen 12, 13 erstreckt, kann in kompakter Bauform das Beaufschlagungsteil 36 zur letztlichen Einwirkung auf die Verpressbacken 5, 6 angetrieben werden. Prinzipiell hat diese konstruktive Gestaltung auch Bedeutung ohne eine zusätzliche bzw. bevorzugt zunächst, mögliche Handbetätigung mittels des Hebelteils 14.

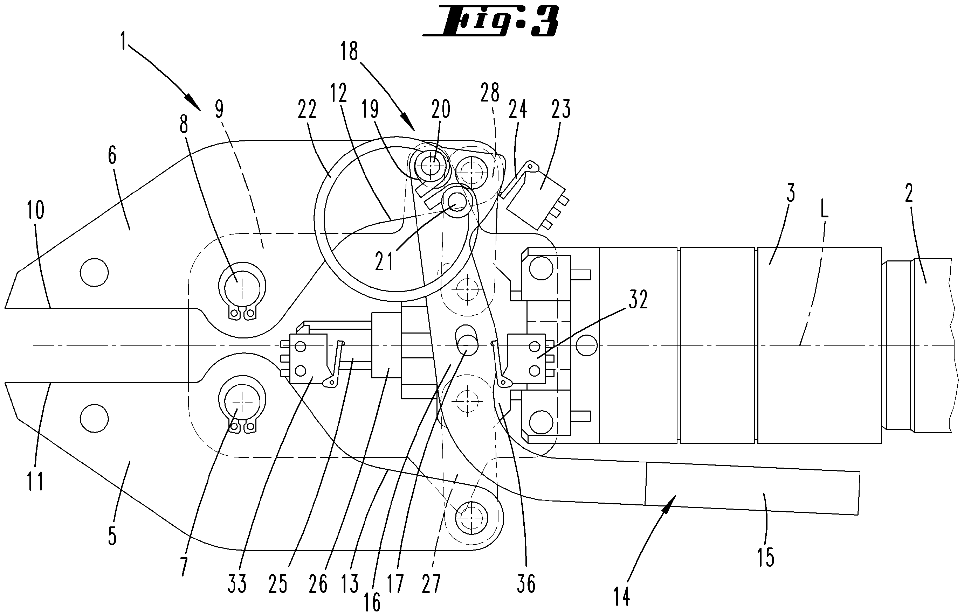

Eine weitere allgemeine Kennzeichnung ist dadurch gegeben, dass das Beaufschlagungsteil 36, bevorzugt bewegt durch die Spindel 25, zur Durchführung der Verpressung von einer dem Arbeitsbereich 10 bzw. 11 nahen Stellung zu einer dem Arbeitsbereich 10 bzw. 11 fernen Stellung zu bewegen ist (vergleiche auch Unterschied Figuren 2, 3).

Das Hebelteil 14 ist bei einigen Ausführungsbeispielen und bevorzugt winkelförmig gestaltet. Ein erster Hebelabschnitt 15, der eine zweite Längserstreckung aufweist, ist zumindest teilweise bezogen auf eine Unteransicht des Presswerkzeuges in Überdeckung zu dem Motor und/oder Getriebe sich erstreckend angeordnet. Er dient als Handhabungsbereich, der von einer Hand, die zugleich den Motor-/Getriebebereich umfasst, erfasst werden kann.

Das Hebelteil 14 liegt bezogen auf eine Draufsicht gemäß Figur 2 auf einer Seite der Spindel 25, allgemeiner betrachtet auf einer Seite der Längsachse 4 des Hand-Presswerkzeuges, zur Betätigung frei, ist aber gemäß einer der beschriebenen Ausführungsformen auf der anderen Seite der Längsachse L und/oder der Spindel 25 drehgelagert (vergleiche auch nachstehend noch weiter erläuterten Dreh-Lagerungsbereich 18).

Ein zweiter Hebelabschnitt 16, der eine erste Längserstreckung aufweist, verläuft hierzu winkelförmig, wobei im Winkelinnenraum sich der Motor und das Getriebe erstreckt. Der zweite Hebelabschnitt 16 kreuzt auch eine Längsachse L des Verpressgerätes. Der zwischen der ersten und zweiten Längserstreckung eingeschlossene Winkel ist bevorzugt ein stumpfer Winkel, weiter bevorzugt ein Winkel zwischen 90° und 150°.

Das Hebelteil 14 und beim Ausführungsbeispiel bevorzugt der Hebelabschnitt 16 sind bevorzugt mit dem Beaufschlagungsteil 36 gelenkig verbunden. Hierzu ist ein Drehgelenk 17 an dem Beaufschlagungsteil 36 und dem Hebelteil 4 bzw. dem Hebelarmteil 16 vorgesehen. Das Hebelteil 14 ist bevorzugt doppelt, sich beidseitig des Beaufschlagungsteils 36 erstreckend, bzw. zumindest bevorzugt im Bereich des Beaufschlagungsteils 36 gabelförmig, ausgebildet. Die beiden Teile bzw. der Gabelbereich sind darüber hinaus in einer Draufsicht etwa gemäß Figur 2 des Presswerkzeuges bevorzugt in Überdeckung.

Das Drehgelenk 17 ist hierbei darüber hinaus bevorzugt zwischen der gehäusefesten Lagerung des Hebelteils 14 und dem freien Ende des ersten Hebelabschnitts 15 angeordnet. Hierbei kann die gelenkige Verbindung zwischen dem Hebelteil 14 und dem Beaufschlagungsteil 36 so vorgesehen sein, dass sich der Hebelabschnitt, an welchem die gelenkige Verbindung zu dem Beaufschlagungsteil 36 ausgebildet ist, zumindest in seiner Längsrichtung relativ zu dem Beaufschlagungsteil 36 bewegen kann.

Die angesprochene gehäusefeste Lagerung des Hebelteils 14 ist bevorzugt an dem dem Hebelarmabschnitt 15 abgewandten Ende ausgebildet. Hier ist ein Lagerungsbereich, bevorzugt ein Dreh-Lagerungsbereich 18, an dem Halterungsteil 9 ausgebildet.

Das Hebelteil 14 ist in dem Lagerungsbereich 18 relativ zu dem Halterungsteil 9 bzw. einem Gehäuse 34 des Presswerkzeuges 1 beweglich. Im Einzelnen ist hierzu in dem diesbezüglichen Bereich des Hebelteils 14 ein Langloch 19 ausgebildet, das beispielsweise von einem an dem Halterungsteil befestigten Stift 20 durchsetzt ist.

Zwischen diesem Stift 20 und einem hebelfesten Gegenlager 21 wirkt eine Feder 22, die bevorzugt vorgespannt ist. Die Feder 22 sucht das Gegenlager 21 von dem durch den Stift 20 gegebenen gehäusefesten Lager wegzubewegen, so dass sich der Stift 20 in dem Langloch 19 an einem ersten Endbereich befindet. Wird nun das Hebelteil 14 mit Handkraft beaufschlagt und die Verpressbacken 5, 6 hierdurch verschwenkt, können sie so zunächst durch Handkraft in eine Stellung verbracht werden, in der ein zwischen den Verpressbacken gefasstes Teil, beispielsweise ein Kabelschuh, gehalten ist aber praktisch noch nicht verpresst wird. In diesem Bewegungsabschnitt ändert sich die Lagerungsposition nicht. Der Dreh-Lagerungsbereich 18 wirkt wie ein feststehendes Lager. Wird dann weiter die Handkraft auf das Hebelteil erhöht, wird schließlich die Kraft der Feder 22 überwunden, so dass das Gegenlager 21 auf den Stift 20 gegen die Kraft der Feder 22 zubewegt wird.

Diese Handkraft entspricht dem von Hand aufgebrachten Klemmdruck auf das in einem Pressmaul, beim Ausführungsbeispiel bevorzugt unmittelbar zwischen den zugeordneten Verpressbacken 5, 6, gehalterten, Werkstück.

Diese genannte Bewegung bewirkt zugleich, dass ein Schalter 23 von dem Hebelteil 14 nicht mehr beaufschlagt ist. Das Hebelteil 14, bzw. konkret beim Ausführungsbeispiel der Hebelabschnitt 15 weist zur Beaufschlagung des Schalters 23, bis die genannte Bewegung erfolgt, bevorzugt einen Rundabschnitt 35 auf, der einen Radius bezogen auf die Randkante des Rundabschnitts 35 aufweist, der dem radialen Abstand eines Punktes dieses Randabschnittes zu dem ersten Lagerungsort des Hebelteils 14, also einem geometrischen Mittelpunkt bezogen auf eine Draufsicht des Stiftes 20, entspricht. Wenn der Schalter 23 entsprechend von dem Hebelteil 14 nicht mehr beaufschlagt ist, kann dadurch ein federvorgespannter Schaltarm 24 des Schalters 23 ausfahren und so eine Schaltung bewirken. Tatsächlich wird hierbei der Elektromotor 2 angeschaltet, wodurch über ein Getriebe eine Spindel 25 in Drehung versetzt wird.

Auch nach erfolgter Bewegung des Gegenlagers 21 auf den Stift 20 zu ist die dann neu eingenommene Lagerposition, bis die entsprechende Kraft wieder abfällt, eine Festlagerposition. Diese Festlagerposition wird ersichtlich auch dann durch das nachstehend weiter erläuterte Verfahrteil 26 unterstützt. Es kommt dann bevorzugt nicht mehr darauf an, dass noch eine Handkraft anliegt.

Auf der Spindel 25 bewegt sich ein Verfahrteil 26, das so durch die motorisch in Drehung versetzte Spindel 25 gegen das Beaufschlagungsteil 36 gefahren wird und im weiteren dann mit Motorkraft das Beaufschlagungsteil 36 weiter in Längsrichtung, in Richtung auf den Elektromotor 2, des Verpresswerkzeuges 1 bewegt. Das Verfahrteil 26 kann zur Zusammenwirkung mit der Spindel 25 als Spindelmutter ausgebildet sein.

Damit finden sich dann das Beaufschlagungsteil und das Verfahrteil letztlich in der Stellung der Figur 3.

Die Verpressbacken 5, 6 werden von dem Beaufschlagungsteil 36 bevorzugt über Lenker 27, 28 bewegt. Einer oder beide Lenker 27, 28 sind hierbei einerseits drehbeweglich mit dem Beaufschlagungsteil 36 und andererseits drehbeweglich mit einer Verpressbacke 5, 6 verbunden. Die Verbindung mit einer Verpressbacke 5, 6 ist hier weiter bevorzugt aus einem bezüglich einer Achse 7, 8 an einem einem Arbeitsbereich 10, 11 abgewandten Ende einer Verpressbacke 5, 6 gegeben. Ersichtlich führen die Lenker, relativ zu der Längserstreckung der Verpressbacken 5, 6, eine Aufstellbewegung durch, bis sie nahezu linear zueinander ausgerichtet verlaufen. Es ergibt sich hierdurch ein Kniehebeleffekt. Es ist auch möglich, dass die Lenker 27, 28 in eine Totpunktstellung die in der Praxis einer fluchtenden Stellung bevorzugt entspricht, oder sogar ein gewisses Maß darüber hinaus bewegt werden. Dies aber zunächst, bevorzugt bis kurz vor der Totpunktstellung, gegen die Kraft eines ersten Teiles 30 der Rückstellfeder 29. In einem weiteren Bereich dann gegen die Kraft eines zweiten Teils 31 der Rückstellfeder 29.

Das zweite Teil 31 der Rückstellfeder 29 hat eine steilere Federkennlinie, und bewirkt in jedem Fall bei Abfall der Motorkraft eine Rückbewegung des Beaufschlagungsteils 13 soweit, dass die Übertotpunktstellung nicht mehr gegeben ist und zufolge der Rückstellfeder 29 bzw. dann insbesondere zufolge des ersten Teils 30 der Rückstellfeder 29 eine Rückbewegung in die Stellung gemäß Figur 1 erfolgt. Die Rückbewegung des Beaufschlagungsteils 13 ist hierbei bevorzugt an die Rückbewegung des Verfahrteils 26 gebunden. Das Verfahrteil 26 wird bevorzugt mittels der motorisch nunmehr entgegengesetzt gedrehten Spindel 25 bewegt und gibt so den Raum frei für die federunterstützte Rückbewegung des nicht mit der Spindel insoweit in Eingriff stehenden Beaufschlagungsteils 13.

Bezüglich der Schaltung des Elektromotors ist ein zweiter Schalter 32 vorgesehen, der bei entsprechender Stellung des Beaufschlagungsteils 13 bzw. des Verfahrteils 26 eine Abschaltung des Elektromotors bewirkt und bevorzugt beim Ausführungsbeispiel eine Rückdrehung des Elektromotors einleitet, zum Verfahren des Verfahrteils 26 mittels der Spindel 25 zurück in die Ausgangsstellung. Hier ist dann weiter bevorzugt ein dritter Schalter 33 vorgesehen, der den Elektromotor letztlich abstellt bis eine neue Verpressung erfolgt.

Ersichtlich sind das Beaufschlagungsteil 36 und das Verfahrteil 26 koaxial und zwar beim Ausführungsbeispiel auf der Spindel 25 bewegbar. Hierbei ist das Verfahrteil 26 unmittelbar in Gewindeeingriff mit der Spindel 25, während das Beaufschlagungsteil 36 die Spindel hülsenartig übergreift und ohne Eingriff mit der Spindel relativ zu dieser bewegbar ist.

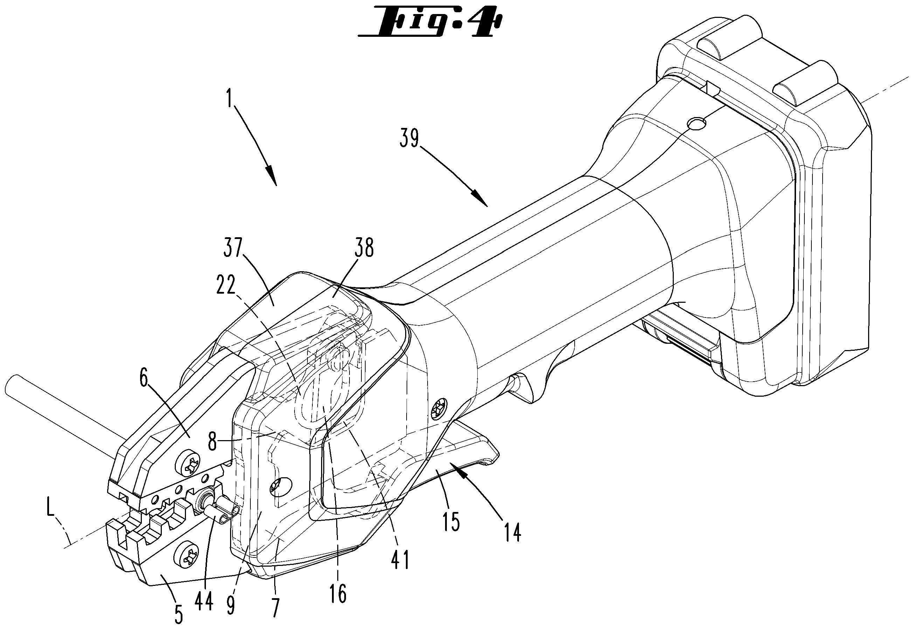

In Figur 4 ist eine perspektivische Darstellung eines Gesamt-Hand-Presswerkzeugs wiedergegeben. Es sind Gehäuseschalen 37, 38 zu erkennen, welche die beim Ausführungsbeispiel zwei Verpressbacken 5, 6 in einem unteren, d. h. dem Rumpfgerät zugewandten Bereich überdecken. Die Überdeckung geht bevorzugt und wie beim Ausführungsbeispiel ersichtlich über die Achsen 7, 8, um welche die Pressbacken 5, 6 verschwenkbar sind, hinaus.

Das Hebelteil 16 ragt bezüglich des Hebelabschnittes 15 nach unten, d. h. rumpfgeräteseitig, einseitig aus einer Gehäuseschale 37, 38 heraus. Bezüglich eines Griffbereiches 39 ist das Hebelteil 14 bzw. der Hebelabschnitt 15 oberseitig, d. h. pressbackenseitig angeordnet.

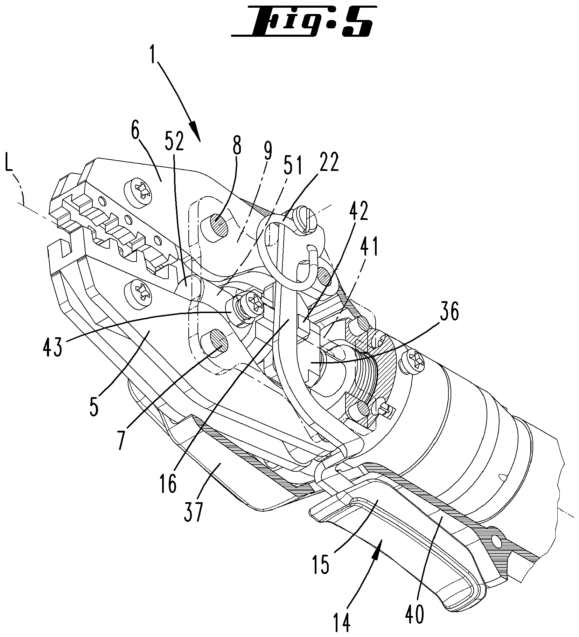

Weitere Einzelheiten hierzu lassen sich auch der Figur 5 entnehmen. Insbesondere dass vorgesehen ist, das der Hebelabschnitt 15 im betätigten Zustand, wie er der Figur 5 zugrunde liegt, in eine entsprechend geformte Gehäuseaufnahme 40 einpasst.

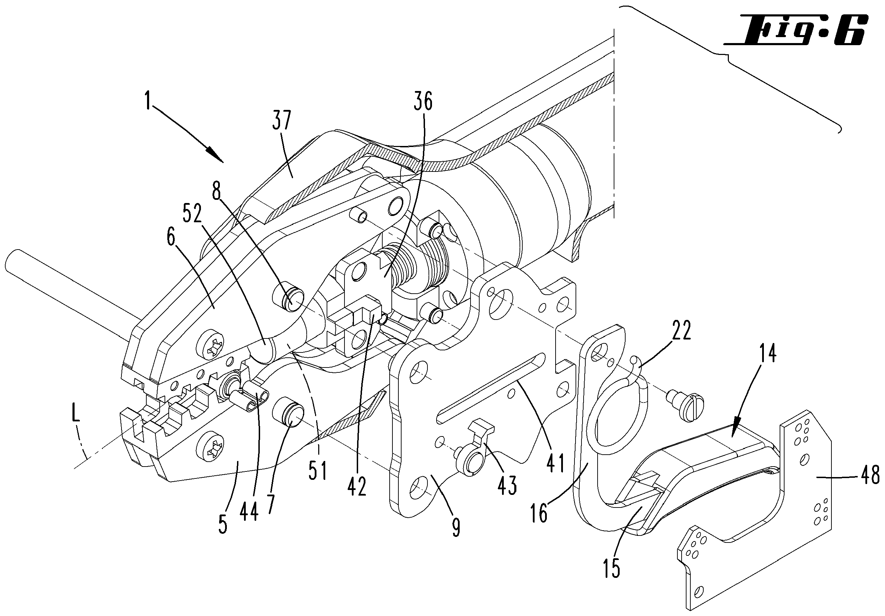

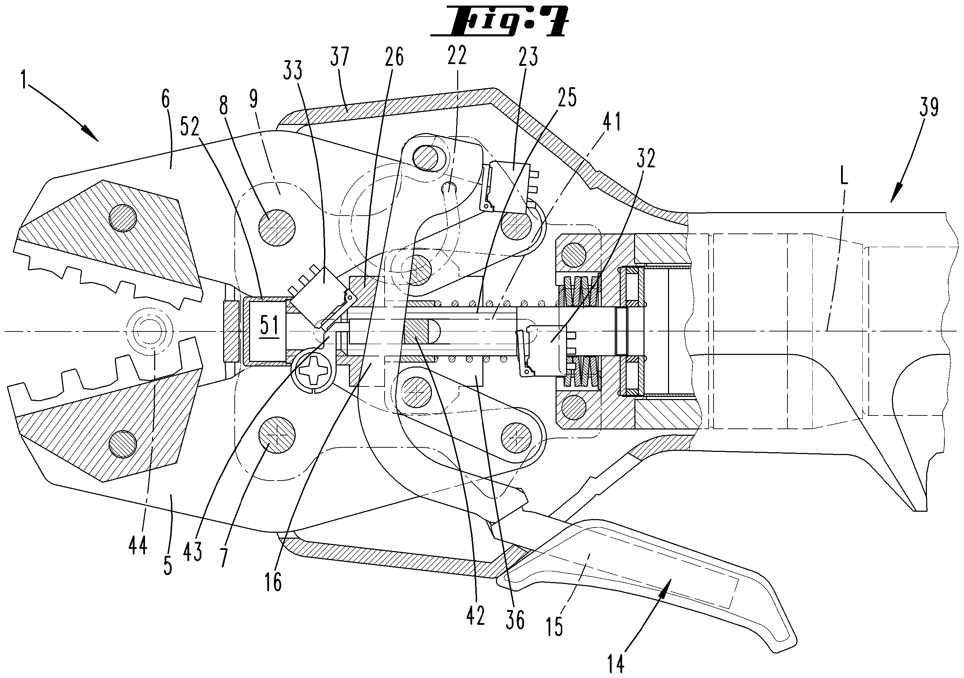

Der Explosionsdarstellung der Figur 6 ist zu entnehmen, dass das Halterungsteil 9, welches die Achsen 7, 8 der Verpressbacken 5, 6 lagert, bevorzugt auch eine Führungsausnehmung 41 aufweist. Die Führungsausnehmung 41 ist weiter bevorzugt als Längsschlitz gebildet. In der Führungsausnehmung 41 kann ein Führungsfortsatz 42 des Beaufschlagungsteils 36 geführt sein. Der Führungsfortsatz 42 kann sich soweit durch die Führungsausnehmung 41 erstrecken, wie dies etwa aus Figur 7 auch zu entnehmen ist, dass er als Gegenanschlag für den Hebelabschnitt 16 dient.

Der maulseitig des Hand-Presswerkzeuges bzw. spindelendseitig vorgesehene Schalter 33 kann bevorzugt, auch unabhängig von dem in Figur 6 bzw. Figur 7 beispielsweise dargestellten Ausführungsbeispiel, durch einen drehgelagerten Hebel 43 beaufschlagbar sein. Der Hebelabschnitt 16 wirkt hierbei auf den Hebel 43 und dieser auf den Schalter 33.

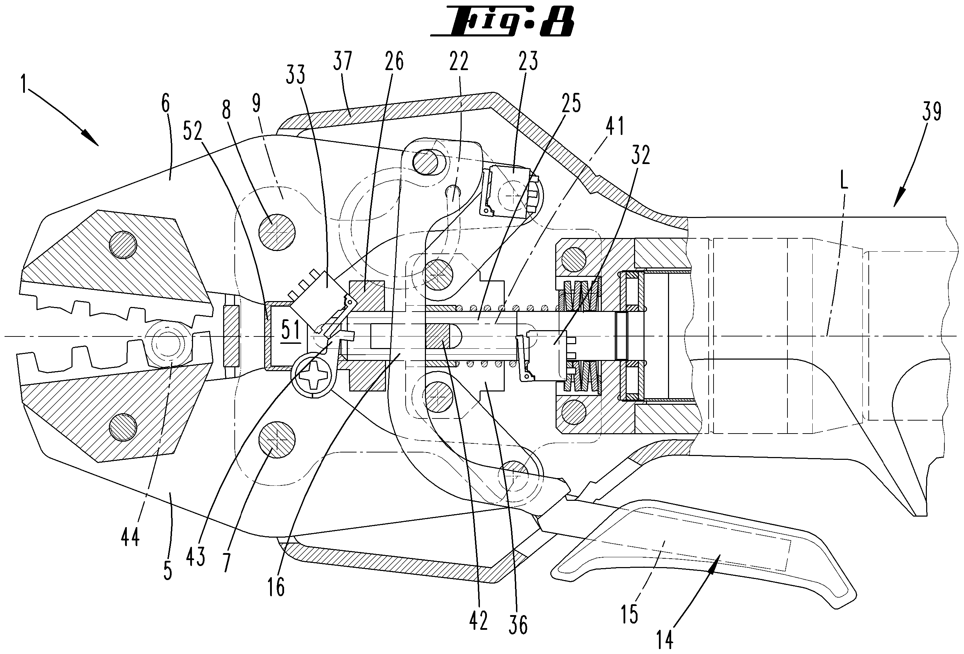

In Figur 8 ist die handbetätigte Stellung, die noch keine Motorbetätigung auslöst, dargestellt. Ein Pressling 44 ist aber bereits im Zangenmaul mit gewissem Anlagedruck gefasst.

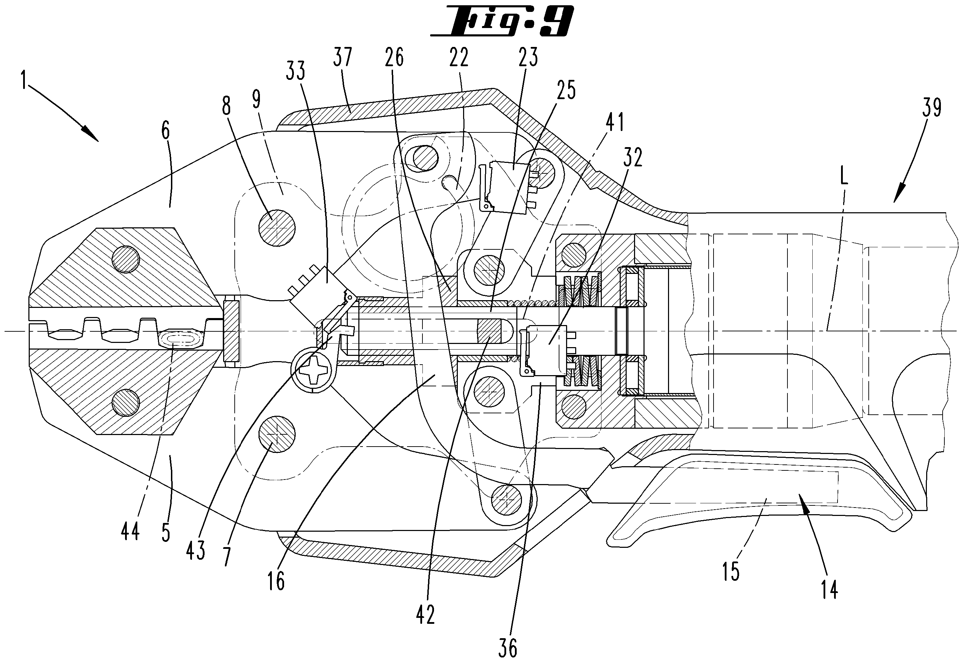

In Figur 9 ist die vollständige Schließung der Verpressbacken 5, 6, nach erfolgter Motorbetätigung dargestellt. Bei diesem Ausführungsbeispiel und bevorzugt ist ein Teil des Beaufschlagungsteils 36, hier der Führungsfortsatz 42, auch zur Betätigung des Schalters 32 genutzt.

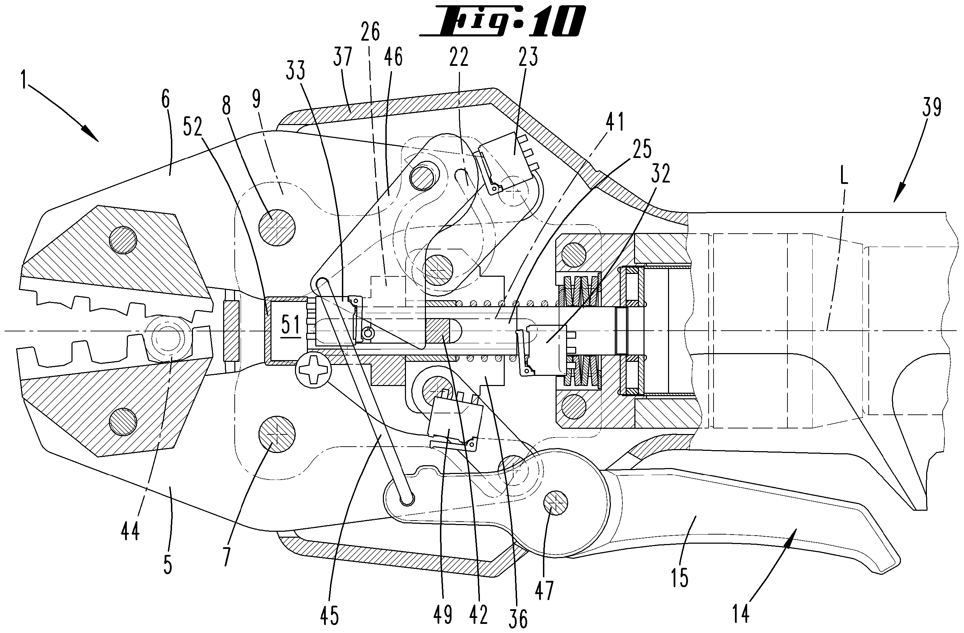

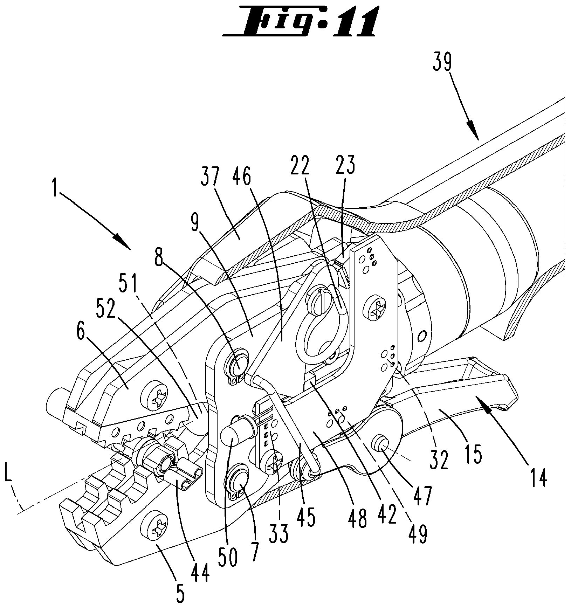

Die mit Bezug zu den Figuren 10 und 11 dargestellte weitere Ausführungsform zeichnet sich dadurch aus, dass das Hebelteil 14 mittels eines Lenkers 45 auf ein Schaltteil 46 einwirkt. Das Schaltteil 46 ist entsprechend dem Hebelabschnitt 16 bei dem zuvor beschriebenen Ausführungsbeispiel gelagert und insofern auch in gleicher Weise durch die Feder 22 vorgespannt. Durch die insofern auch hier gegebene Abstützung des Schaltteils 46 an dem Beaufschlagungsteil 36, bevorzugt dem Führungsfortsatz 42, ergibt sich auch hier die mögliche Hebelwirkung, um bei stärkerer Belastung auf den Hebel 14 die Motorunterstützung auszulösen.

Bei starker Belastung dreht das Schaltteil 46 um einen Abstützpunkt auf dem Führungsfortsatz 42, so dass sein dem Schalter 23 zugeordnetes Ende sich von diesem entfernt (gegen die Kraft der Feder 22) und hierdurch der Motor zur Auslösung der Motorbetätigung des Beaufschlagungsteils 36 geschaltet wird.

Bei der Ausführungsform der Figur 10 ist weiter bevorzugt wie ersichtlich der Hebel 14 auf der Seite der Spindel 25 gelagert, vgl. Drehachse 47, auf welcher der Hebelabschnitt 16 auch zur Betätigung freiliegt.

Aus der Darstellung der Figur 11 ist zu erkennen, dass beim Ausführungsbeispiel und bevorzugt oberhalb des Halterungsteils 9 eine Platine 48 angeordnet ist. Die Platine 48 haltert bevorzugt alle hier vorgesehenen Schalter 23, 32 und 33. Hierbei ist bevorzugt auch noch ein vierter Schalter 49 vorgesehen. Der Schalter 49 ist dazu genutzt, eine Motorbetätigung zu unterbrechen, wenn der Hebelabschnitt 15 entgegengesetzt zu einer Bewegung, die zu einer Verpressung durchführbar ist, die beim Ausführungsbeispiel und bevorzugt auf den Griffbereich 39 zu gerichtet ist, bewegt wird. Hierbei kann ein Fortsatz des Hebels 15 auf den Schalter 49 einwirken, wodurch der Motor abgeschaltet wird, so dass keine weitere Verpressung erfolgt. Bevorzugt wird hierdurch dann sogleich auch die Freigabe des Beaufschlagungsteils ausgelöst, so dass sich das Zangenmaul wieder öffnet.

Vor einer vollständigen Durchführung einer Verpressung kann so schalterbetätigt eine Freigabe des Beaufschlagungsteils für eine Rücklaufbewegung durchführbar sein. Die Freigabe beinhaltet auch bevorzugt, dass der Motor mit entgegengesetztem Drehsinn wieder angeschaltet wird, hierdurch das Verfahrteil zurückgefahren wird und so die Freigabe des Beaufschlagungsteils erfolgt.

Auf der Platine 48 ist weiter ein Leuchtmittel 50 beim Ausführungsbeispiel in Form einer Leuchtdiode angeordnet. Das Leuchtmittel 50 strahlt in Richtung einer Bewegung des Beaufschlagungsteils 36, gerichtet zum freien Ende der Verpressbacken 5, 6 hin. Eine entsprechende Öffnung bzw. Lichtdurchlass ist hierzu auch bevorzugt in einer oder beiden genannten Gehäuseschalen 37, 38 vorgesehen.

Weiter ist bevorzugt, wie sich dies etwa aus Figur 8 ergibt, dass zugeordnet einem freien Ende der Spindel 25 ein Schmiermittelvorrat 51 vorgesehen ist. Der Schmiermittelvorrat 51 ist in einer Hülse 52 aufgenommen, die mit ihrer Öffnung gerichtet zu der Spindel hin, bevorzugt auch in Übergriff zu dem freien Ende der Spindel, angeordnet ist.

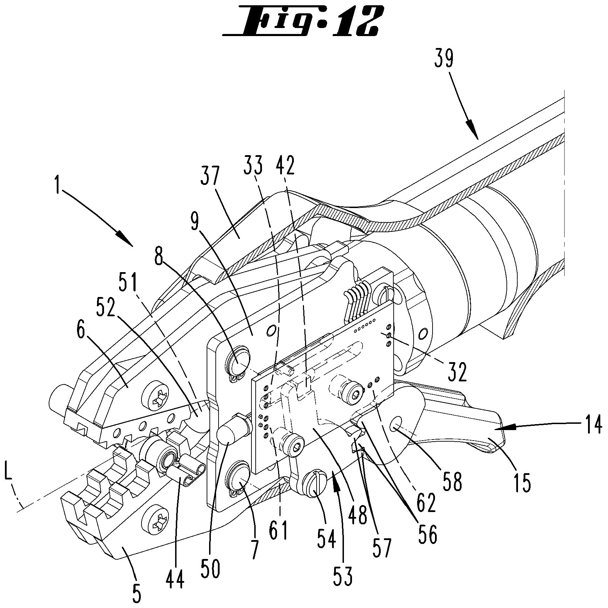

Mit Bezug zu den Figuren 12 bis 19 ist eine weitere Ausführungsform und der diesbezügliche Ablauf bei einer Betätigung beschrieben. Gleiche Teile sind mit denselben Bezugszeichen versehen.

Ein bei der Ausführungsform der Figuren 10 und 11 als Lenker 45 ausgebildetes Zwischenteil ist bei der Ausführungsform der Figuren 12 bis 19 als Zwischenhebel 53 ausgebildet. Der Zwischenhebel 53 ist gehäusefest über eine Achse 54 gelagert. Der Zwischenhebel 53, was aber ersichtlich in gleicher Weise für den Hebel bzw. Hebelabschnitt 16 oder den Lenker 45 der vorangegangenen Ausführungsformen zutreffen kann, ist unterhalb der Platine 48 geführt.

Der Zwischenhebel 53 ist weiter bevorzugt als Winkelhebel ausgebildet. In winklig bevorzugt etwa rechtwinklig sich zueinander erstreckenden Bereichen ist einerseits die Zusammenwirkung mit dem Hebelteil 14 gegeben und andererseits die Zusammenwirkung mit dem Führungsfortsatz 42.

Die Zusammenwirkung mit dem Führungsfortsatz 42 ist bevorzugt durch Formschluss gegeben. Eine Stufenausnehmung an dem Zwischenhebel 53 schafft eine Beaufschlagungsfläche, die in Richtung von dem Pressmaul abgewandt auf dem Führungsfortsatz 42 aufliegt.

Die Zusammenwirkung des Zwischenhebels 53 und des Hebelteils 14 ist auch bevorzugt formschlüssig bei diesem Ausführungsbeispiel gegeben. Im Einzelnen ist eine Verzahnung 55 ausgebildet. Hierbei sind bevorzugt nur wenige Zähne, beim Ausführungsbeispiel zwei Zähne, jeweils verwirklicht.

Von Bedeutung ist auch, dass die Zähne 56 des Hebelteils 14 eine größere Breite aufweisen als die Zähne 57 des Zwischenhebels 53. Dies ist beispielsweise möglich, weil der Zwischenhebel 53 bevorzugt aus einem härteren bzw. höher belastbaren Material besteht als das Hebelteil 14. Das Hebelteil 14 besteht bevorzugt aus einem Hartkunststoff, während das Zwischenhebelteil 53 ein Metallteil ist.

Die Auslösung der Verpressung durch Überwindung eines von Hand aufgebrachten Klemmdrucks ist bei dem Ausführungsbeispiel der Figuren 12 bis 19 durch eine Bewegbarkeit des Hebelteils 14 relativ zu dem Gehäuse gegeben.

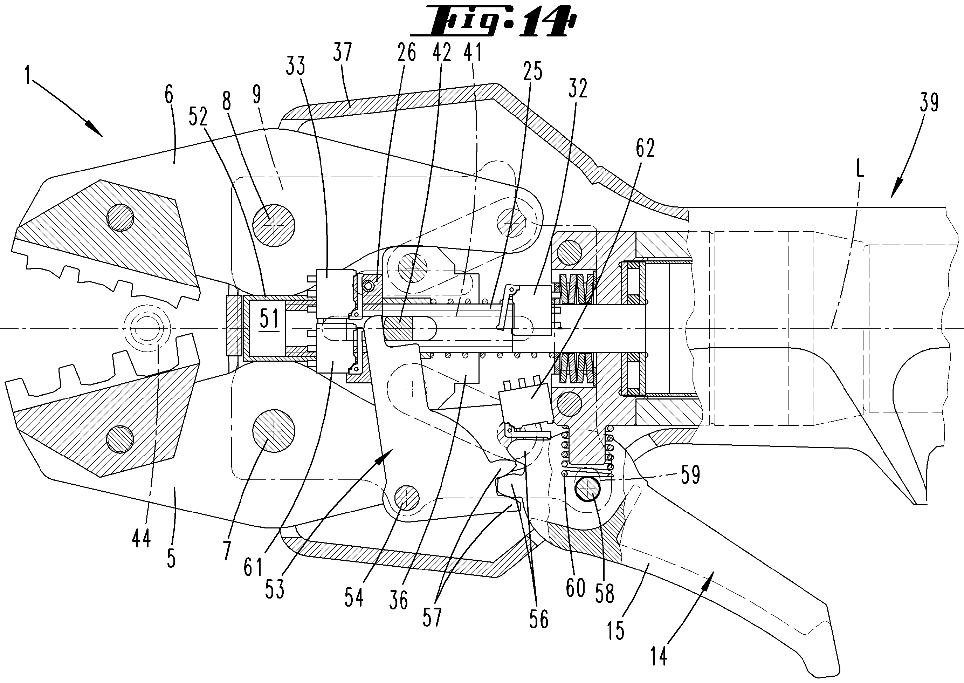

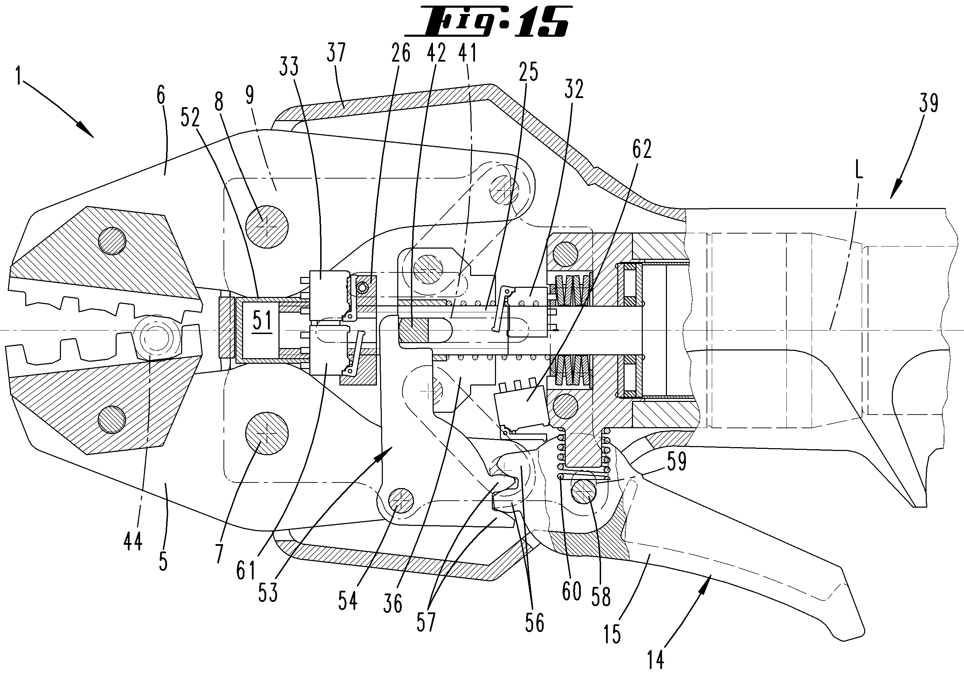

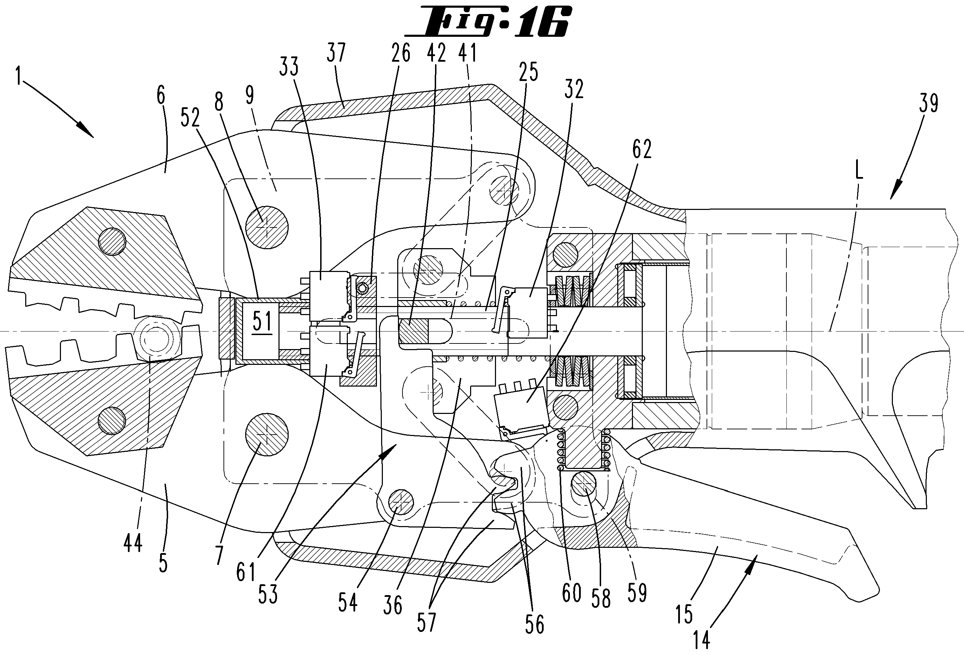

Im Einzelnen weist das Hebelteil 14 eine Lagerachse 58 auf, die gehäuseseitig jeweils in einem Langloch 59 aufgenommen ist. Durch eine gehäuseseitig abgestützte Druckfeder 60 ist im Ausgangszustand etwa der Figur 14 das Hebelteil 14 mit seiner Lagerachse 58 gegen ein Ende des Langlochs 59 vorgespannt. Im Zuge einer Betätigung, vergleiche den Unterschied der Figuren 15 und 16, wenn ein von Hand hierdurch aufgebrachter Klemmdruck auf das in dem Verpressmaul befindliche Werkstück überschritten wird, wird das Hebelteil 14 zusammen mit der Lagerachse 58 in dem bzw. den Langloch/Langlöchern 59 verlagert, beim Ausführungsbeispiel in Richtung auf die Spindel 25. Hierdurch wird der Schalter 62, der funktionell dem schon vorstehend beschriebenen Schalter 23 entspricht, betätigt. Hier mit dem Unterschied, dass der Schalter 62 unmittelbar durch das Hebelteil 14 beaufschlagt ist.

Durch Betätigung des Schalters 62 wird der Motor und damit beim Ausführungsbeispiel das Drehen der Spindel 25 und hierdurch weiter das Verfahren des Verfahrteils 26 und somit die motorische Bewegung der Verpressbacken 5, 6 in die Verpressstellung ausgelöst.

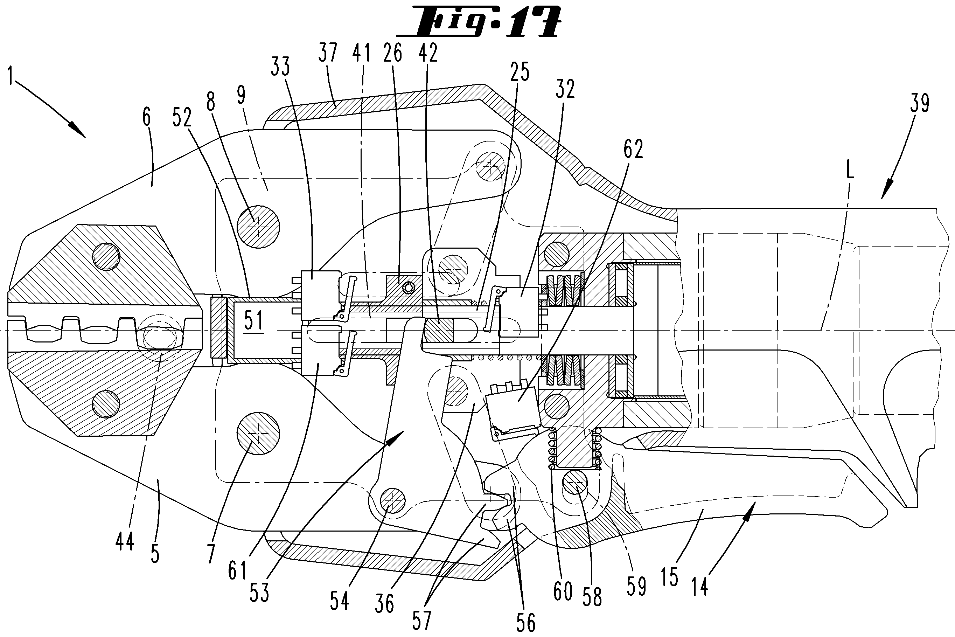

Während zunächst, im Handbetrieb, vergleiche Unterschied zwischen den Stellungen der Figuren 14 und 15, nur das Beaufschlagungsteil 36 entlang der Spindel bewegt wird, wird nach Einsetzen des Motorbetriebes, vergleiche Unterschied zwischen Figuren 16 und 17, durch die Spindel das Verfahrteil 26 bewegt, das dann durch Druckausübung auf das Beaufschlagungsteil 36 die motorunterstützte Verpressung durchführen lässt.

Das Erreichen der Verpressstellung wird, wie auch bei den zuvor beschriebenen Ausführungsbeispielen, durch den Schalter 32 erfasst.

Der Schalter 33 ist für den Beginn bzw. das Ende des Motorbetriebes vorgesehen. Wenn über den Schalter 62 der Motorbetrieb ausgelöst wird, erfasst der Schalter 33 das tatsächliche Verfahren des Verfahrteils 26 und/oder das Wiederzurückkehren des Verfahrteils 26 in seine Ausgangsstellung, wonach der Motor abschaltet.

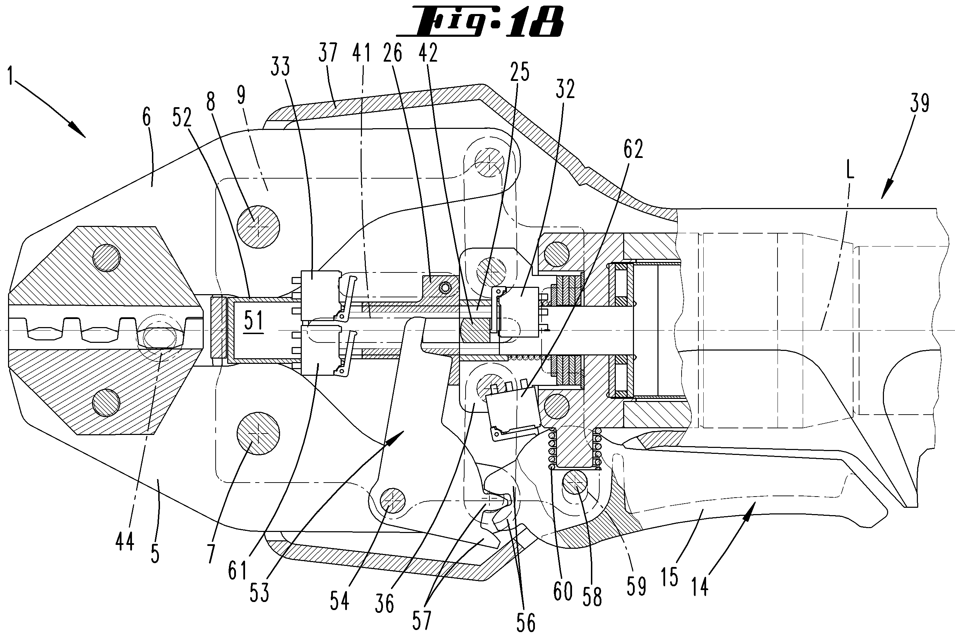

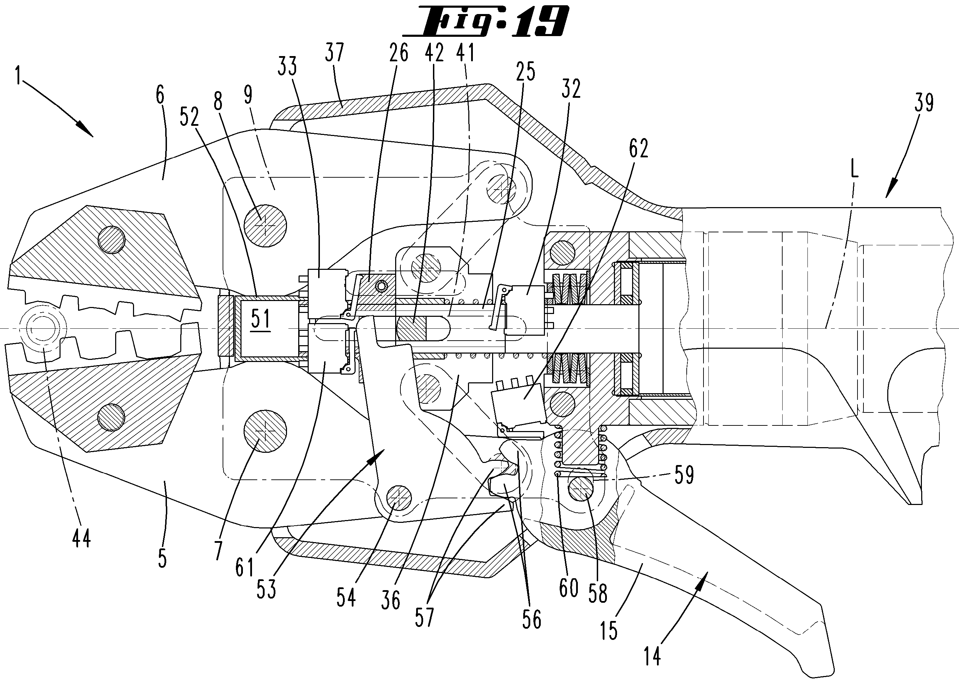

Es ist darüber hinaus eine Möglichkeit für eine Notbetätigung gegeben. Dies ist beim Ausführungsbeispiel konkret durch den Schalter 61 erreicht. Das Zwischenteil bzw. konkret beim Ausführungsbeispiel der Zwischenhebel 53 kann mittels des Hebelteils 14 auch bezüglich seiner Beaufschlagungsbewegung in entgegengesetzter Richtung bewegt werden. Etwa nach Erreichen der Stellung der Figur 16, wenn ein Notaus erwünscht ist, kann der Zwischenhebel 53 in diesem Fall, bezogen auf die Darstellung, gegen den Uhrzeigersinn bewegt werden, um so den Schalter 61 zu betätigen, vgl. Figur 18 (Zwischenstellung) und Figur 19.

Die Lagerachse 58 ist weiter bevorzugt drehfest mit dem Hebelteil 14 verbunden. Hierdurch ergibt sich eine gewisse Reibbeaufschlagung beim Bewegen des Hebelteils 14 bezüglich der Druckfeder 60. Dies wirkt einem unbeabsichtigten Bewegen des Hebelteils 14 in die Notausstellung entgegen.

Eine solche erhöhte Reibung kann auch durch andere Maßnahmen erreicht sein. Etwa durch eine gewisse enge Passung der Lagerachse 58 in dem Langloch 59.

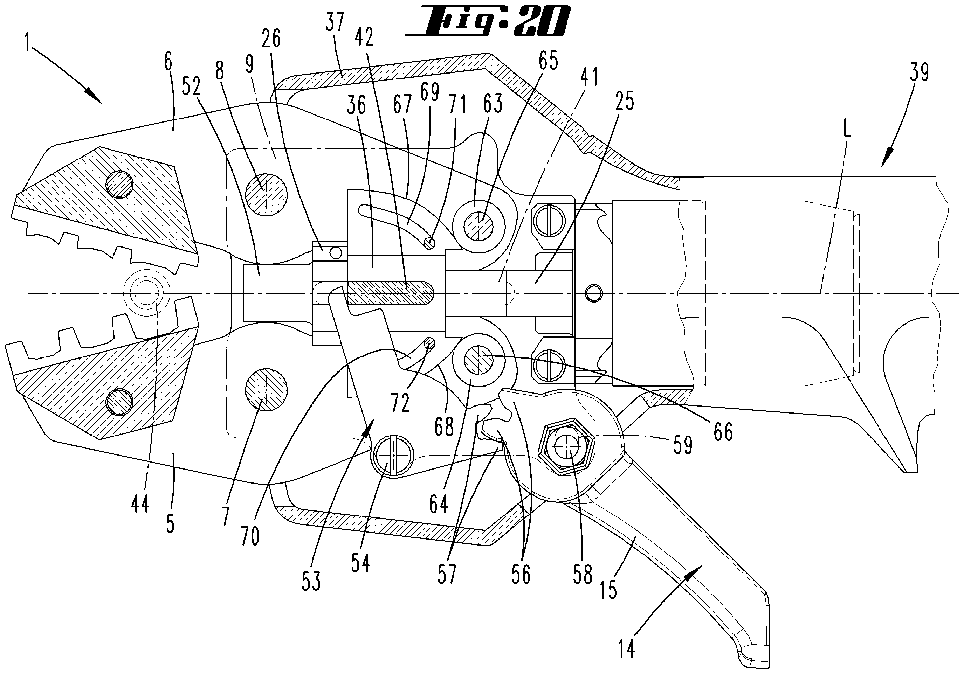

In den Ausführungsbeispielen der Figuren 20 bis 25 sind, in prinzipieller Darstellung, Ausführungsbeispiele wiedergegeben, bei welchen die Beaufschlagung der Verpressbacken (die wie auch vorstehend im Rahmen der Erfindung auch Schneidbacken sein können) durch Wälzkörper wie insbesondere Rollen dargestellt.

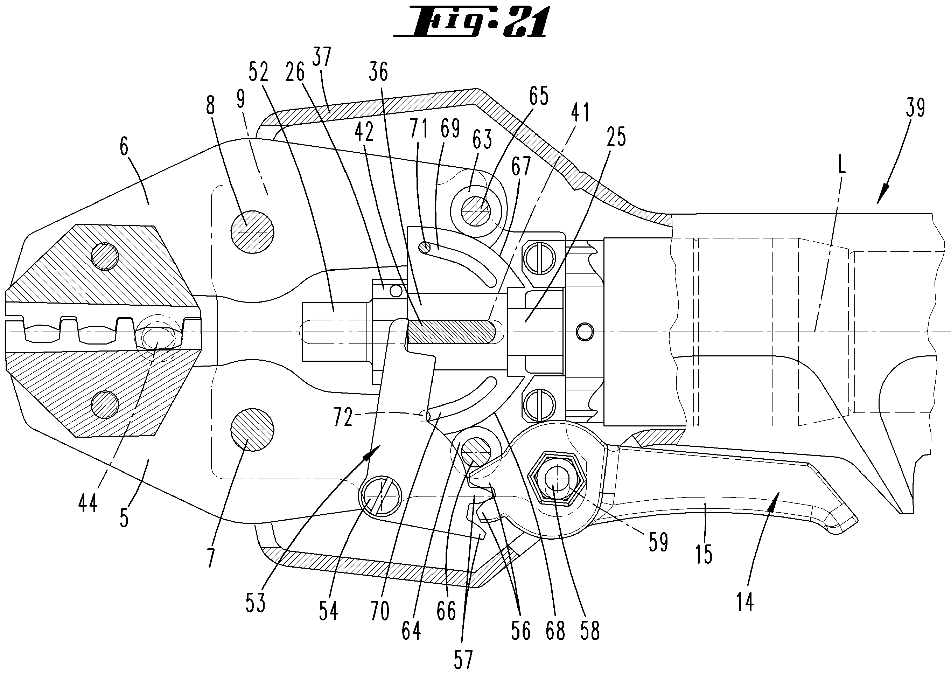

Bei der Ausführungsform der Figuren 20 und 21 sind zwei Wälzkörper, hier Rollen 63, 64 an jeweils einer Verpressbacke 5, 6 angebracht. Sie sind drehbar um eine jeweilige mit der Verpressbacke 5, 6 fest verbundene Achse 65, 66.

Das Beaufschlagungsteil 36 weist bei diesem Ausführungsbeispiel Abrollkanten 67, 68 auf, die beim Verfahren des Beaufschlagungsteils 36 relativ zu der Spindel 25 bzw. einer Linearführung allgemein auf die Rollen 63, 64 einwirken und hiermit die Verpressbacken an ihrem hinteren Endbereich, also dem dem Elektromotor bzw. dem Griffbereich zugewandten Endbereich der Verpressbacken 5, 6 spreizend bzw. auseinanderfahrend beaufschlagen. Hierzu sind ersichtlich die Abrollkanten 67, 68 sich zur Maulseite des Werkzeugs erweiternd hinsichtlich ihrer Randkontur geformt. Es versteht sich, dass in einer demgegenüber seitlichen Ansicht der Abrollkante sich diese bevorzugt als Abrollfläche darstellt. Die Abrollfläche kann hierbei einer Höhe (Erstreckung in Achsrichtung) der Rollen 63, 64 entsprechen oder einem Teil dieser Höhe, etwa ¹/₁₀ bis ⁹/₁₀ der Höhe.

Das Beaufschlagungsteil 36 weist weiter eine bzw. zwei Führungsausnehmungen 69 bzw. 70 auf, mit welchen die Verpressbacken 5, 6, beim Ausführungsbeispiel über jeweils einen Stift 71, 72 zusammenwirken. Die Führungsausnehmung 69 bzw. 70 ist wie ersichtlich bevorzugt als Langloch gestaltet. Diese Führungsausnehmung 69, 70 und der damit zusammenwirkende Stift 71, 72 dienen nur zur zwangsläufigen Zurückbewegung der Verpressbacken 5, 6 in die Öffnungsstellung gemäß Figur 20 nach Durchführung einer Verpressung, also aus der Stellung gemäß Figur 21. Bevorzugt werden hierüber praktisch keine wesentlichen Kräfte, insbesondere keine Verpresskräfte, übertragen. Die Ausbildung einer entsprechenden Ausnehmung könnte auch an der Verpressbacke und die des Stiftes an dem Beaufschlagungsteil vorgesehen sein.

Im Übrigen entsprechen die Ausführungsform und der Funktionsablauf bei einem Gerät gemäß den Figuren 20 und 21 einer der vorstehend beschriebenen Ausführungsformen.

Insbesondere weist auch hier das Beaufschlagungsteil 36 bevorzugt einen Führungsfortsatz 42 auf, und sind zufolge einer Einwirkung durch das Hebelteil 14, bevorzugt auf den Führungsfortsatz 42, die Verpressbacken 5, 6 über eine zunächst erfolgende Handbetätigung in eine erste Klemmstellung zu verfahren. Alternativ könnte auch beispielsweise eine Magnetmitnahme gegeben sein. Dies betrifft natürlich auch alle hier beschriebenen Ausführungsformen.

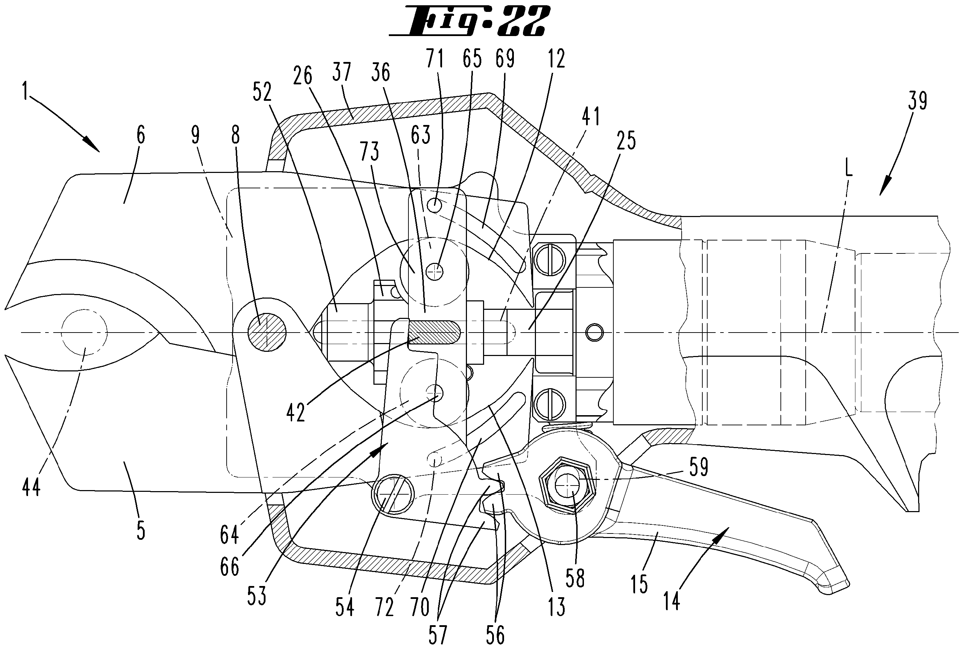

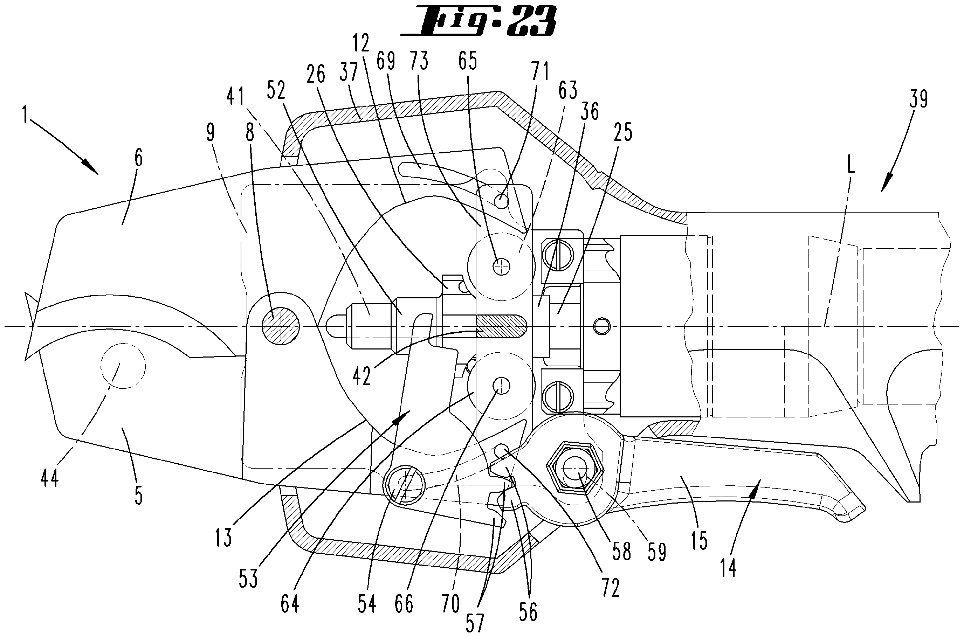

Die Ausführungsform der Figuren 22 und 23 unterscheidet sich von der Ausführungsform der Figuren 20 und 21 wesentlich dadurch, dass die Rollen 63, 64 an dem Beaufschlagungsteil 36 gelagert sind und mit diesem verfahren. Entsprechend sind auch die Achsen 65, 66 an dem Beaufschlagungsteil 36 angebracht.

In gleicher Weise ist auch bevorzugt eine umgekehrte Ausgestaltung hinsichtlich der Führungsausnehmungen 69 und 70 gegeben. Diese sind nunmehr an den Verpressbacken, den zugeordneten Enden der Verpressbacken 5, 6 ausgebildet, während die Stifte 71, 72 nunmehr mit dem Beaufschlagungsteil 36 fest verbunden sind.

Im Einzelnen weist das Beaufschlagungsteil 36 zur Lagerung der Achsen 65, 66 bzw. der Stifte 71, 72, beim Ausführungsbeispiel ersichtlich ein bzw. zwei gegenüberliegende (in den Darstellungen ist nur eines sichtbar) Halterungsträger 73 auf. Ein Halterungsträger erstreckt sich rechtwinklig zu einer Längsachse L bzw. zu einer Erstreckung der Spindel 25.

Die Verpressbacken 5, 6 weisen zur Zusammenwirkung mit den Rollen 63, 64 bei den Ausführungsbeispielen der Figuren 20 bis 25 jeweils einen konkav gestalteten Beaufschlagungsbereich 12, 13 auf.

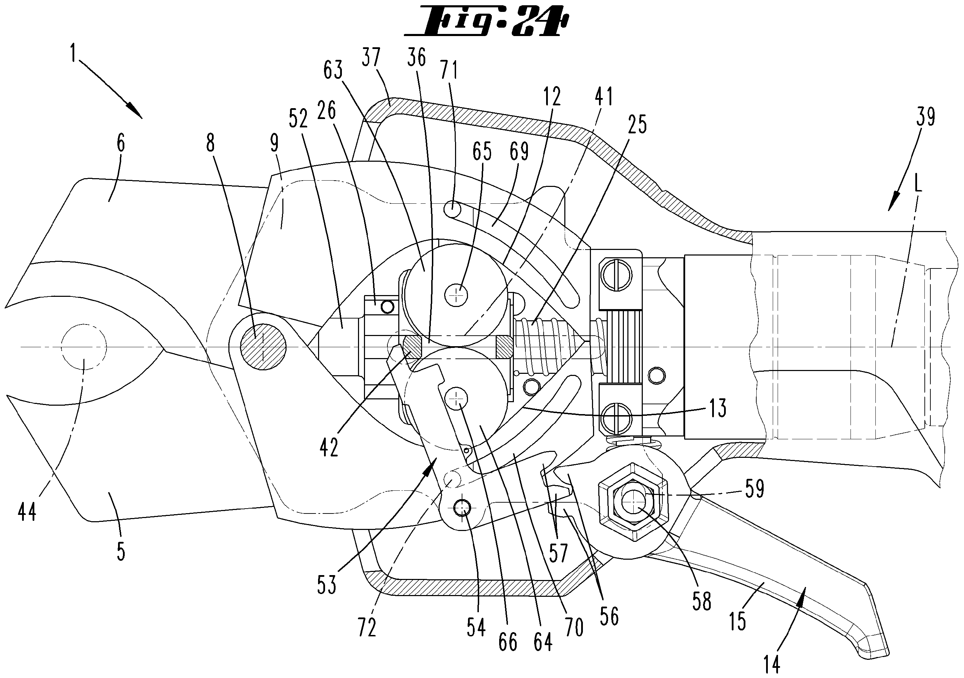

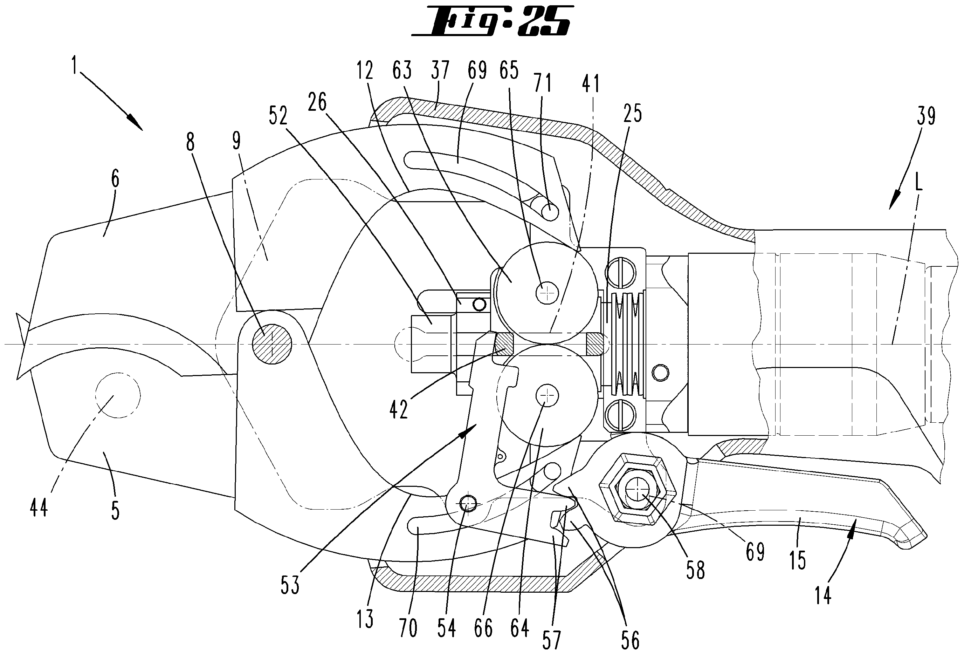

Bei dem Ausführungsbeispiel der Figuren 24 und 25 sind im Unterschied zu dem Ausführungsbeispiel der Figuren 22 und 23 zwei Rollen 63, 64 vorgesehen, die sich auf ihrer einem Beaufschlagungsbereich 12, 13 einer Verpressbacke 5, 6 abgewandten Bereich unmittelbar gegeneinander abstützen. Sie rollen dort aufeinander ab. Dies ist ersichtlich kräftemäßig günstig, da die Verpresskräfte dann nicht mehr wesentlich in den Achsen 65, 66 aufzunehmen sind.

Da im Weiteren aber weiter bevorzugt ist, dass die Spindel 25 oder eine entsprechende Linearführung das Beaufschlagungsteil 36 weiter durchsetzt, sind in weiterer Einzelheit beim Ausführungsbeispiel der Figuren 24 und 25 bevorzugt vier Rollen 63, 64 vorgesehen, von welchen jeweils zwei, bevorzugt fluchtend, übereinander angeordnet sind. Zwischen zwei jeweils zusammenwirkenden Rollen 63, 64, diesen aneinander angeordneten Paaren, ergibt sich entsprechend ein etagenmäßiger Abstand, der zur erforderlichen Durchgriffsöffnung für die Spindel 25 bzw. die Linearführung genutzt ist.

Ansonsten ist auch bei diesem Ausführungsbeispiel eine gleiche Funktionalität wie bei den zuvor beschriebenen Ausführungsbeispielen, mit einer oder mehreren der dort im Einzelnen beschriebenen möglichen unterschiedlichen Ausgestaltungen, gegeben.

**Bezugszeichenliste**

| | | | |
|---|---|---|---|
| 1 | Presswerkzeug | 27 | Lenker |
| 2 | Elektromotor | 28 | Lenker |
| 3 | Getriebe | 29 | Rückstellfeder |
| 4 | Akkumulator | 30 | erstes Teil |
| 5 | Verpressbacke | 31 | zweites Teil |
| 6 | Verpressbacke | 32 | Schalter |
| 7 | Achse | 33 | Schalter |
| 8 | Achse | 34 | Gehäuse |
| 9 | Halterungsteil | 35 | Rundabschnitt |
| 10 | Arbeitsbereich | 36 | Beaufschlagungsteil |
| 11 | Arbeitsbereich | 37 | Gehäuseschale |
| 12 | Beaufschlagungsbereich | 38 | Gehäuseschale |
| 13 | Beaufschlagungsbereich | 39 | Griffbereich |
| 14 | Hebelteil | 40 | Gehäuseaufnahme |
| 15 | Hebelabschnitt | 41 | Führungsausnehmung |
| 16 | Hebelabschnitt | 42 | Führungsfortsatz |
| 17 | Drehgelenk | 43 | Hebel |
| 18 | Dreh-Lagerungsbereich | 44 | Pressling |
| 19 | Langloch | 45 | Lenker |
| 20 | Stift | 46 | Schaltteil |
| 21 | Gegenlager | 47 | Drehachse |
| 22 | Feder | 48 | Platine |
| 23 | Schalter | 49 | Schalter |
| 24 | Schaltarm | 50 | Leuchtmittel |
| 25 | Spindel | 51 | Schmiermittelvorrat |
| 26 | Verfahrteil | 52 | Hülse |
| | | | |
| 53 | Zwischenhebel | | |
| 54 | Achse | | |
| 55 | Verzahnung | | |
| 56 | Zähne | | |
| 57 | Zähne | | |
| 58 | Lagerachse | | |
| 59 | Langloch | | |
| 60 | Druckfeder | | |
| 61 | Schalter | | |
| 62 | Schalter | | |
| 63 | Rolle | | |
| 64 | Rolle | | |
| 65 | Achse | | |
| 66 | Achse | | |
| 67 | Abrollkante | | |
| 68 | Abrollkante | | |
| 69 | Führungsausnehmung | | |
| 70 | Führungsausnehmung | | |
| 71 | Stift | | |
| 72 | Stift | | |
| 73 | Halterungsträger | | |
| | | | |
| L | Längsachse | | |
| u | Überlappungsbereich | | |

## Patentansprüche

1. Motorbetriebenes Hand-Presswerkzeug (1), insbesondere eine Crimpzange, mit einem feststehenden Halterungsteil (9), in dem zwei um jeweils eine Schwenkachse schwenkbare Verpressbacken (5, 6) gelagert sind, welche Verpressbacken (5, 6) auf der einen Seite der Schwenkachse einen Arbeitsbereich (10, 11) und auf der anderen Seite einen sich in Längsrichtung der Verpressbacken (5, 6) erstreckenden Beaufschlagungsbereich (12) ausbildet, wobei zur Durchführung einer Verpressung auf den Beaufschlagungsbereich (12) mit einem relativ zu dem Beaufschlagungsbereich (12) bewegbaren Beaufschlagungsteil (36) einwirkbar ist, und in einer Draufsicht auf das Hand-Presswerkzeug (1), in welcher sich die Schwenkachse punktförmig abbildet, eine in einer Längserstreckungsrichtung der Verpressbacken axial feststehende, durch einen Elektromotor angetriebene Gewindespindel (25) sich bis in eine quer zu einer Längsachse der Gewindespindel (25) gegebene Überdeckung zu dem Beaufschlagungsbereich erstreckt, wobei die Gewindespindel (25) zur motorischen Beaufschlagung eines Verfahrteils dient, das in kraftübertragende Einwirkung auf das Beaufschlagungsteil (36) bringbar ist, **dadurch gekennzeichnet, dass** das Presswerkzeug (1) langgestreckt stabartig ausgebildet ist, mit dem Elektromotor, der Gewindespindel (25) und einem Getriebe zwischen dem Elektromotor und der Gewindespindel (25) in stabartiger Hintereinanderanordnung und dass die Gewindespindel (25) sich längsmittig zwischen Beaufschlagungsbereichen (12, 13) der Verpressbacken (5, 6) erstreckt.

2. Presswerkzeug nach nach Anspruch 1, **dadurch gekennzeichnet, dass** das Beaufschlagungsteil (36) zur Durchführung der Verpressung von einer dem Arbeitsbereich nahen Stellung zu einer dem Arbeitsbereich fernen Stellung zu bewegen ist.

3. Presswerkzeug nach einem der vorhergehenden Ansprüche, **dadurch gekennzeichnet, dass** die Verpressbacken (5, 6) handbetätigt in eine Klemmstellung bewegbar sind und dass eine Auslösung einer motorischen Bewegung in Abhängigkeit eines von Hand aufgebrachten Klemmdruckes erfolgt.

4. Presswerkzeug nach einem der vorhergehenden Ansprüche, **dadurch gekennzeichnet, dass** mittels eines Übertragungsteils auf das Beaufschlagungsteil (36) einwirkbar ist, wobei, bevorzugt, das Übertragungsteil ein Hebelteil (14) ist, wobei, weiter bevorzugt, das Hebelteil (14) mit dem Beaufschlagungsteil (36) gelenkverbunden ist und/oder das Hebelteil (14) an dem Halterungsteil (9) in einem Lagerungsbereich gelagert ist, wobei, bevorzugt, das Hebelteil (14) in dem Lagerungsbereich relativ zu einem Gehäuse (34) beweglich ist, und/oder das Hebelteil (14) aus einem ersten Lagerungsort durch Überschreiten eines Schwellwertes der auf das Hebelteil (14) wirkenden Handkraft bewegbar ist und/ oder durch eine Bewegung des Hebelteils (14) im Lagerungsbereich eine Ein- oder Ausschaltung des Elektromotors (2) auslösbar ist.

5. Presswerkzeug nach einem der vorhergehenden Ansprüche, **dadurch gekennzeichnet, dass** das Beaufschlagungsteil (36) über einen Lenker (27) auf die Verpressbacken (5, 6) einwirkt und/oder das Beaufschlagungsteil (36) über eine oder mehrere Rollen (63, 64) auf die Verpressbacken (5, 6) einwirkt.

6. Presswerkzeug nach Anspruch 5, **dadurch gekennzeichnet, dass** die eine oder mehrere Rollen (63, 64) mit der Verpressbacke (5, 6) verbunden sind oder dass eine oder mehrere der Rollen (63, 64) mit dem Beaufschlagungsteil (36) verbunden sind.

7. Presswerkzeug nach einem der vorhergehenden Ansprüche, **dadurch gekennzeichnet, dass** das Beaufschlagungsteil (36) und das Verfahrteil (26) koaxial bewegbar sind und/oder dass das Beaufschlagungsteil (36) gegen die Kraft einer Rückstellfeder (29) zu bewegen ist, wobei, bevorzugt, die Rückstellfeder (29) zugeordnet einer fortgeschrittenen Verschwenkung aus einer Ruhestellung in eine Verpressstellung einer Verpressbacke (5, 6) eine steilere Federkennlinie aufweist als zugeordnet einem Beginn der Verschwenkung, wobei, weiter bevorzugt, die Rückstellfeder (29) mehrteilig ausgebildet ist.

8. Presswerkzeug nach einem der Ansprüche 4 bis 7, **dadurch gekennzeichnet, dass** in Abhängigkeit eines Überschreitens eines Kraft-Schwellwertes vor vollständiger Durchführung einer Verpressung eine Freigabe des Hebelteils (14) nur ein Anhalten einer Bewegung der Verpressbacken (5, 6) bewirkt, wobei, bevorzugt, der Kraft-Schwellwert durch eine Messung des Motorstromes feststellbar ist.

9. Presswerkzeug nach einem der vorhergehenden Ansprüche, **dadurch gekennzeichnet, dass** vor vollständiger Durchführung einer Verpressung schalterbetätigt eine Freigabe des Beaufschlagungsteils (36) für eine Rücklaufbewegung durchführbar ist, um ein Verschwenken der Verpressbacken (5, 6) in eine Öffnungsstellung zu ermöglichen, wobei, bevorzugt, die Freigabe des Beaufschlagungsteils (36) durch eine Bewegung des Hebels (14) unter Ausübung von Handkraft unterschiedlich zu einer Bewegung des Hebelteils (14) bei einer Verpressung durchführbar ist und/oder dass das Hebelteil (14) mittels eines Lenkers (45) auf ein schwenkbewegbares Schaltteil (46) einwirkt und/oder dass das Hebelteil (14) in der Draufsicht auf der Seite der Spindel (25) drehgelagert ist, auf welcher er zur Betätigung freiliegt.

10. Presswerkzeug nach Anspruch 9, **dadurch gekennzeichnet, dass** zwei oder mehr Schalter (23, 32, 33, 61, 62) vorgesehen sind, wobei, bevorzugt, vier Schalter (23, 32, 33, 61, 62) vorgesehen sind und/oder dass alle Schalter (23, 32, 33, 61, 62) auf einer gemeinsamen Platine (48) vorgesehen sind.

11. Presswerkzeug nach einem der vorhergehenden Ansprüche, **dadurch gekennzeichnet, dass** ein in einer Bewegungsrichtung des Beaufschlagungsteils strahlendes Leuchtmittel (50) vorgesehen ist.

12. Presswerkzeug nach einem der Ansprüche 10 oder 11, **dadurch gekennzeichnet, dass** das Leuchtmittel (50) auf der Platine (48) angeordnet ist.

13. Presswerkzeug nach einem der vorhergehenden Ansprüche, **dadurch gekennzeichnet, dass** zugeordnet der Spindel (25) ein Schmiermittelvorrat (51) vorgesehen ist, wobei, bevorzugt, der Schmiermittelvorrat (51) endseitig der Spindel (25) vorgesehen ist.

14. Presswerkzeug nach einem der Ansprüche 4 bis 13, **dadurch gekennzeichnet, dass** das Hebelteil (14) über einen Zwischenhebel (53) auf das Beaufschlagungsteil (36) einwirkt, wobei, bevorzugt, das Hebelteil (14) den Zwischenhebel (53) mittels einer Verzahnung bewegt und/oder dass das Hebelteil (14) ein Kunststoffteil ist und/oder dass der Zwischenhebel (53) ein Metallteil ist.

15. Presswerkzeug nach einem der vorhergehenden Ansprüche, **dadurch gekennzeichnet, dass** zufolge einer Speicherung eines beispielsweise einem Pressbeginn entsprechenden Wertes bezüglich einer Spindelstellung ein teilweises Zurückfahren des Beaufschlagungsteils (36) und/ oder des Verfahrteils (26) vorgebbar ist, wobei, bevorzugt die Speicherung und/oder das teilweise Zurückfahren durch eine Betätigungsabfolge auslösbar ist.

## Claims

1. Motor-operated manual pressing tool (1), in particular a crimping tool, comprising a fixed holding part (9) in which two compression jaws (5, 6) are mounted which are pivotable about a pivot axis in each case, which compression jaws (5, 6) form a working region (10, 11) on one side of the pivot axis and form an impingement region (12) on the other side, which impingement region extends in the longitudinal direction of the compression jaws (5, 6), it being possible for an impinging part (36) to act on the impingement region (12) in order to carry out a compression action, which impinging part can be moved relative to the impingement region (12), and, in a plan view of the manual pressing tool (1), in which the pivot axis is indicated by dots, a threaded spindle (25), which is axially fixed in a longitudinal extension direction of the compression jaws and is driven by an electric motor, extends as far as an overlap of the impingement region, which overlap is provided so as to be transverse with respect to a longitudinal axis of the threaded spindle (25), the threaded spindle (25) providing motorised impingement of a displacement part, which can be made to act on the impinging part (36) so as to transmit force, **characterised in that** the pressing tool (1) is designed to be like an elongated rod, having the electric motor, the threaded spindle (25) and a gear mechanism in a rod-like arrangement one behind the other between the electric motor and the threaded spindle (25), and **in that** the threaded spindle (25) extends longitudinally centrally between impingement regions (12, 13) of the compression jaws (5, 6).

2. Pressing tool according to claim 1, **characterised in that**, in order to carry out the compression action, the impinging part (36) should be moved from a position close to the working region to a position remote from the working region.

3. Pressing tool according to either of the preceding claims, **characterised in that** the compression jaws (5, 6) are manually moved into a clamping position and **in that** a motorised movement is triggered depending on a manually applied clamping pressure.

4. Pressing tool according to any of the preceding claims, **characterised in that** a transmission part can act on the impinging part (36), the transmission part preferably being a lever part (14), the lever part (14) more preferably being articulated with the impinging part (36), and/or the lever part (14) being mounted on the holding part (9) in a mounting region, the lever part (14) preferably being movable, relative to a housing (34), in the mounting region, and/or it being possible to move the lever part (14) from a first mounting location by exceeding a threshold value of the manual force acting on the lever part (14), and/or it being possible to trigger switching of the electric motor (2) on or off by moving the lever part (14) in the mounting region.

5. Pressing tool according to any of the preceding claims, **characterised in that** the impinging part (36) acts on the compression jaws (5, 6) via a link (27) and/or the impinging part (36) acts on the compression jaws (5, 6) via one or more rollers (63, 64).

6. Pressing tool according to claim 5, **characterised in that** the one or more rollers (63, 64) are connected to the compression jaws (5, 6) or **in that** one or more of the rollers (63, 64) are connected to the impinging part (36).

7. Pressing tool according to any of the preceding claims, **characterised in that** the impinging part (36) and the displacement part (26) are coaxially movable and/or **in that** the impinging part (36) should be moved against the force of a return spring (29), the return spring (29) preferably having a steeper spring characteristic when associated with a progressive pivoting movement out of a starting position into a compression position of a set of compression jaws (5, 6) than when associated with the start of the pivoting movement, the return spring (29) more preferably being in multiple parts.

8. Pressing tool according to any of claims 4 to 7, **characterised in that**, depending on a force threshold value being exceeded prior to a compression action being fully carried out, releasing the lever part (14) merely stops movement of the compression jaws (5, 6), it being preferably possible for the force threshold value to be established by measuring the motor current.

9. Pressing tool according to any of the preceding claims, **characterised in that**, prior to a compression action being fully carried out, release of the impinging part (36) by switch actuation is carried out for a return movement, so as to allow the compression jaws (5, 6) to pivot into an open position, it being preferably possible to release the impinging part (36) by moving the lever (14) by exerting manual force in a manner different from moving the lever part (14) during a compression action and/or **in that** the lever part (14) acts on a pivotally movable switching part (46) by means of a link (45) and/or **in that**, in plan view, the lever part (14) is rotatably mounted on the side of the spindle (25) on which it is exposed for actuation.

10. Pressing tool according to claim 9, **characterised in that** two or more switches (23, 32, 33, 61, 62) are provided, preferably four switches (23, 32, 33, 61, 62) being provided and/or **in that** all switches (23, 32, 33, 61, 62) are provided on a common circuit board (48).

11. Pressing tool according to any of the preceding claims, **characterised in that** a lamp (50) is provided which radiates in a movement direction of the impinging part.

12. Pressing tool according to either claim 10 or claim 11, **characterised in that** the lamp (50) is arranged on the circuit board (48).

13. Pressing tool according to any of the preceding claims, **characterised in that** a lubricant reservoir (51) is provided so as to be associated with the spindle (25), the lubricant reservoir (51) preferably being provided at the end of the spindle (25).

14. Pressing tool according to any of claims 4 to 13, **characterised in that** the lever part (14) acts on the impinging part (36) via an intermediate lever (53), the lever part (14) preferably moving the intermediate lever (53) by means of a toothing system, and/or **in that** the lever part (14) is a plastics part and/or **in that** the intermediate lever (53) is a metal part.

15. Pressing tool according to any of the preceding claims, **characterised in that**, as a result of storing a value relating to a spindle position that corresponds, for example, to a start of a pressing action, partial retraction of the impinging part (36) and/or the displacement part (26) can be predefined, it being possible for the storage and/or the partial retraction to be triggered by an actuation sequence.

## Revendications

1. Outil de compression manuel motorisé (1), en particulier une pince à sertir, comprenant un élément de support fixe (9) dans lequel sont supportées deux mâchoires de compression (5, 6) aptes à pivoter chacune autour d'un axe de pivotement, lesquelles mâchoires de compression(5, 6) forment d'un côté de l'axe de pivotement une région de travail (10, 11) et de l'autre côté de l'axe de pivotement une région d'actionnement (12) s'étendant dans la direction longitudinale des mâchoires de compression 5, 6), dans lequel la région d'actionnement (12) est susceptible être sollicitée par un élément d'actionnement (36) déplaçable relativement à la région d'actionnement (12) pour exécuter une compression et, dans une vue de dessus de l'outil de compression manuel (1) dans laquelle l'axe de pivotement est représenté sous la forme d'un point, une broche filetée (25) axialement fixe dans la direction d'extension longitudinale des mâchoires de compression et entrainée par un moteur électrique s'étend jusqu'à un recouvrement de la région d'actionnement transversalement à un axe longitudinal de la broche filetée (25), dans lequel la broche filetée (25) sert à l'actionnement motorisé d'un élément mobile qui est susceptible d'être amené à venir agir en transmission d'efforts sur l'élément d'actionnement (36), **caractérisé en ce que** l'outil de compression (1) est de construction allongée à la manière d'une tige, avec le moteur électrique, la broche filetée (25) et un mécanisme de transmission entre le moteur électrique et la tige filetée (25) qui sont agencés l'un derrière l'autre à la manière d'une tige, et **en ce que** la broche filetée (25) s'étend longitudinalement au centre entre des régions d'actionnement (12, 13) des mâchoires de pressage (5, 6).

2. Outil de compression selon la revendication 1, **caractérisé en ce que**, pour effectuer le pressage, l'élément d'actionnement (36) doit être déplacée d'une position proche de la région de travail à une position éloignée de la région de travail.

3. Outil de compression selon l'une des revendications précédentes, **caractérisé en ce que** les mâchoires de compression (5, 6) peuvent être déplacées manuellement dans une position de serrage et **en ce qu'**un déclenchement du déplacement motorisé est provoqué en fonction d'une pression de serrage développée manuellement.

4. Outil de compression selon l'une des revendications précédentes, **caractérisé en ce qu'**il est possible d'agir sur l'élément d'actionnement (36) au moyen d'un élément de transmission, dans lequel l'élément de transmission est préférentiellement un levier (14), dans lequel le levier (14) est en outre préférentiellement relié de manière articulée avec l'élément d'actionnement (36) et/ou le levier (14) est monté sur l'élément de support (9) dans une région de montage, dans lequel, de manière préférentielle, le levier (14) est déplaçable dans la région de montage relativement à un boîtier (34) et/ou le levier (14) est déplaçable hors d'un premier emplacement de montage de par l'effort manuel exercé sur le levier (14) qui excède une valeur de seuil et/ou un démarrage ou arrêt du moteur électrique (2) est susceptible d'être déclenché par un déplacement du levier (14) dans la région de montage.

5. Outil de compression selon l'une des revendications précédentes, **caractérisé en ce que** l'élément d'actionnement (36) agit sur les mâchoires de compression (5, 6) par le biais d'une bielle (27) et/ou l'élément d'actionnement (36) agit sur les mâchoires de compression (5, 6) par le biais d'un ou plusieurs rouleaux (63, 64).

6. Outil de compression selon la revendication 5, **caractérisé en ce que** l'un ou plusieurs rouleaux (63, 64) sont liés avec la mâchoire de compression (5, 6) ou qu'un ou plusieurs rouleaux (63, 64) sont liés à l'élément d'actionnement (36).

7. Outil de compression selon l'une des revendications précédentes, **caractérisé en ce que** l'élément d'actionnement (36) et l'élément mobile (26) sont déplaçables de manière coaxiale et/ou **en ce que** l'élément d'actionnement (36) doit être déplacé à l'encontre de l'effort d'un ressort de rappel (29), dans lequel le ressort de rappel (29) présente de préférence une courbe caractéristique d'élasticité plus raide pour un pivotement avancé d'une mâchoire de compression (5, 6) hors d'une position de repos dans une position de compression que pour un début du pivotement, dans lequel le ressort de rappel (29) est en outre préférentiellement réalisé en plusieurs parties.

8. Outil de compression selon l'une des revendications 4 à 7, **caractérisé en ce que**, en dépendance à un dépassement d'une valeur de seuil d'effort avant exécution complète d'une compression, une libération du levier (14) provoque uniquement un arrêt d'un déplacement des mâchoires de compression (5,6), dans lequel préférentiellement la valeur de seuil d'effort est déterminable par une mesure du courant du moteur.

9. Outil de compression selon l'une des revendications précédentes, **caractérisé en ce qu'**une libération de l'élément d'actionnement (36) aux fins d'un déplacement en arrière est susceptible d'être réalisée par actionnement d'un interrupteur avant l'exécution complète d'une compression afin de permettre un pivotement des mâchoires de compression (5,6) dans une position ouverte, dans lequel préférentiellement la libération de l'élément d'actionnement (36) est susceptible d'être réalisée au moyen d'un déplacement du levier (14) par application d'un effort manuel qui est différent du déplacement du levier (14) lors d'une compression et/ou **en ce que** le levier (14) agit sur un élément de commutation (46) déplaçable par pivotement par le biais d'une bielle (45) et/ou **en ce que** le levier (14) est monté à rotation, dans la vue de dessus, sur le côté de la broche (25) sur laquelle il s'étend librement aux fins d'actionnement.

10. Outil de compression selon la revendication 9, **caractérisé en ce que** deux interrupteurs (23, 32, 33, 61, 62) ou plus sont prévus, dans lequel quatre interrupteurs (23, 32, 33, 61, 62) sont de préférence prévus et/ou **en ce que** tous les interrupteurs (23,32, 33, 61, 62) sont prévus sur une platine commune (48).

11. Outil de compression selon l'une des revendications précédentes, **caractérisé en ce qu'**est prévu un moyen d'éclairage (50) rayonnant dans une direction de déplacement de l'élément d'actionnement.

12. Outil de compression selon l'une des revendications 10 ou 11, **caractérisé en ce que** le moyen d'éclairage (50) est agencé sur la platine (48) .

13. Outil de compression selon l'une des revendications précédentes, **caractérisé en ce qu'**est prévu une réserve de lubrifiant (51) associée à la broche (25), dans lequel la réserve de lubrifiant (51) est de préférence prévue à un côté d'extrémité de la broche (25).

14. Outil de compression selon l'une des revendications 4 à 13, **caractérisé en ce que** le levier (14) agit sur l'élément d'actionnement (36) par le biais d'un levier intermédiaire (53), dans lequel préférentiellement le levier (14) déplace le levier intermédiaire (53) au moyen d'une denture et/ou **en ce que** le levier (14) est une pièce en matière plastique et/ou **en ce que** le levier intermédiaire (53) est une pièce métallique.

15. Outil de compression selon l'une des revendications précédentes, **caractérisé en ce qu'**un déplacement partiel en arrière de l'élément d'actionnement (36) et/ou de l'élément mobile (26) est susceptible d'être prédéfini en conséquence de la mémorisation d'une valeur relative à la position de la broche correspondant par exemple à un début de compression, dans lequel préférentiellement la mémorisation et/ou le déplacement partiel en arrière est susceptible d'être déclenché par une séquence d'actionnement.
